(19) Europäisches Patentamt
European Patent Office
Office européen des brevets

(11) **EP 2 860 204 B1**

(12) **EUROPEAN PATENT SPECIFICATION**

(45) Date of publication and mention
of the grant of the patent:
**01.08.2018  Bulletin 2018/31**

(51) Int Cl.:
***C08F 2/00*** (2006.01)    ***C08L 23/06*** (2006.01)
***F16L 9/12*** (2006.01)

(21) Application number: **13004880.4**

(22) Date of filing: **10.10.2013**

(54) **Polyethylene composition for pipe applications**

Polyethylenzusammensetzung für Rohranwendungen

Composition de polyéthylène pour applications de tuyau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.04.2015  Bulletin 2015/16**

(73) Proprietor: **Borealis AG**
**1220 Vienna (AT)**

(72) Inventors:
• **Vahteri, Markku**
**06100 Porvoo (FI)**
• **Hjertberg, Thomas**
**432 56 Kungshamn (SE)**
• **Liu, Yi**
**4209 Engerwitzdorf (AT)**
• **Piel, Tanja**
**4030 Linz (AT)**
• **Albunia, Alexandra Romina**
**4021 Linz (AT)**
• **Wahner, Udo**
**4030 Linz (AT)**

(74) Representative: **Kador & Partner PartG mbB
Corneliusstraße 15
80469 München (DE)**

(56) References cited:
**EP-A1- 1 460 105      EP-A1- 1 655 333
EP-A1- 2 186 833      EP-A1- 2 583 998
EP-A1- 2 620 472      WO-A1-00/22040**

• **SONG S ET AL: "Effect of small amount of ultra
high molecular weight component on the
crystallization behaviors of bimodal high density
polyethylene", POLYMER, ELSEVIER SCIENCE
PUBLISHERS B.V, GB, vol. 49, no. 12, 10 June
2008 (2008-06-10) , pages 2964-2973,
XP022703137, ISSN: 0032-3861, DOI:
10.1016/J.POLYMER.2008.04.050 [retrieved on
2008-05-02]**

Remarks:
The file contains technical information submitted after
the application was filed and not included in this
specification

**EP 2 860 204 B1**

## Description

The present invention relates to a polyethylene composition, particularly a polyethylene composition for pipe applications comprising a high density polyethylene base resin. The invention further concerns a process for the production of the polyethylene composition and articles, preferably pipes, made from the inventive polyethylene composition.

## Background of the invention

Numerous polyethylene compositions for the production of pipes are known. Pipe materials are classified such as PE80 or PE100. The service temperature for PE100 is 20°C. The ISO 9080 classification guarantees that a PE100 material will have a lifetime of at least 50 years at 20°C using internal stress of 10 MPa.

EP1987097 in the name of Chevron Phillips Chemical Company discloses a polyethylene suitable for pipes having a pellets' density of 947 kg/m$^3$ to 954 kg/m$^3$ and a MFR$_{21}$, (ASTM D1238, 21.6 kg load) of 1 to 30 g/10min. The exemplified resins showed weight average molecular weights of 278 to 346 kg/mol at Mw/Mn of from 30.5 to 35.1.

EP1781712 in the name of UNIVATION TECH LLC [US] discloses various compositions, including but not limited to a high strength bimodal polyethylene composition having a density of 0.940 g/cc or more, the composition comprising a high molecular weight polyethylene component having a higher weight average molecular weight (HwHMW) and a low molecular weight polyethylene component having a lower weight average molecular weight (HwLMW), wherein the ratio of the higher weight average molecular weight to the lower weight average molecular weight (MwHMW:MwLMW) is 30 or more; and the composition qualifies as a PE 100 material such that in accordance with ISO 1167 a pipe formed from the composition that is subjected to internal pipe resistance has an extrapolated stress of 10 MPa or more when the internal pipe resistance curve is extrapolated to 50 or 100 years in accordance with ISO 9080:2003.

EP1922342 of the Ineos group discloses compositions having a natural density of 935 up to 956 kg/m$^3$ at a melt flow rate (5 kg load) of 0.15 to 0.5 g/10 min, the comonomer being 1-hexene and a dynamic viscosity at 100 rad/s, 190°C of no more than 2500 Pa·s.

EP 1146079 in the name of Borealis Technology Oy discloses compositions having a powder density of at least 953 kg/m$^3$ and a final density of the composition in the range of 955 to 965 kg/m$^3$, a MFR$_5$ of 0.15 to 0.40 g/10 min. Pipes made from the compositions meet a design stress of at least 9.0 MPa (PE112). The compositions are composed of two components, whereby the low molecular weight component is a ethylene homopolymer having a MFR$_2$ of 350 to 1500 g/10 min and is present in an amount of 42 to 55 wt.-%.

According to ISO 9080, polyethylene pipes are classified by their minimum required strength, i.e. their capability to withstand different hoop stresses during 50 years at 20°C without fracturing. Thereby, pipes withstanding a hoop stress of 8.0 MPa (MRS$_{8.0}$) are classified as PE80 pipes, and pipes withstanding a hoop stress of 10.0 MPa (MRS$_{10.0}$) are classified as PE100 pipes. The next evolutionary step in polyethylene pipe development will be PE125 pipes withstanding a hoop stress of 12.5 MPa (MRS$_{12.5}$). To meet the PE80 requirements with multimodal resins manufactured by conventional Ziegler-Natta catalysts, the density needs to be at least 940 kg/m$^3$ and to meet PE100 requirements the density needs to be above 945 kg/m$^3$.

Besides the high density, multimodal polyethylene resins for the production of pipes should exhibit excellent mechanical and impact properties while maintaining good processability. In general, these properties depend on the molecular weight of the polyethylene composition. The higher the molecular weight, the greater are e.g. impact strength, sagging behavior and rapid crack propagation properties. Accordingly, improved impact and mechanical properties can be achieved by increasing the molecular weight of at least one polyethylene fraction in a polyethylene composition.

However, this usually leads to a loss in homogeneity due to an increased difference in the viscosity between the higher and the lower molecular weight fraction. These compatibility problems particularly apply in the case an ultra high molecular weight fraction (UHMW) is included into a polyethylene composition for further improving the impact mechanical properties, as it becomes more and more difficult to homogenize the ultra high molecular weight particles into the polymer matrix.

These ultra high molecular weight particles then occur as so-called "white spots" in the compounded material and may cause roughness or surface defects in the articles, such as pipes, produced from the polyethylene composition. That is, low degrees of homogeneity adversely affect the surface properties of the polymer composition.

The beneficial effect of including an UHMW polyethylene fraction into HDPE via extrusion has been investigated and carried out using a co-rotating twin screw extruder by Hung and Brown (Polymer, 1992, 33, 2989-2997). However, although the UHMW polyethylene particles where found to be well bonded in the matrix, helping to slow down the rate of crack propagation, the UHMW polyethylene was found to remain in separate domains with no evidence of "melting" into the HDPE matrix.

Thus, there is still a need for polyethylene compositions having a base resin with a high density for the production of pipes which show improved balance of properties regarding processability, impact properties, mechanical properties such as tensile properties and sagging behavior as well as rapid crack propagation properties together with a good

2

homogeneity.

## Summary of the invention

The present invention is based on the surprising finding that the above-mentioned balance of properties can be achieved if the pipes are made from polyethylene composition comprising
a base resin having a density of more than 946.0 kg/m$^3$ and equal to or less than 955.0 kg/m$^3$, determined according to ISO 1183-1:2004,
wherein the composition has a melt flow rate MFR$_{21}$ (190°C, 21.6 kg) of 1.7 to 7.0 g/10 min, determined according to ISO 1133 and a flow rate ratio FRR$_{21/5}$, being the ratio of MFR$_{21}$ (190°C, 21.6 kg) to MFR$_5$ (190°C, 5 kg), of more than 10 to equal to or less than 40, determined according to ISO 1133, and a viscosity at a constant stress of 747 Pa, eta$_{747Pa}$, of 4,500,000 Pa·s to 10,000,000 Pa·s.

The present invention insofar provides a polyethylene composition comprising a base resin having a density of more than 946.0 kg/m$^3$ and equal to or less than 955.0 kg/m$^3$, determined according to ISO 1183-1:2004,
wherein the composition has a melt flow rate MFR$_{21}$ (190°C, 21.6 kg) of 1.7 to 7.0 g/10 min, determined according to ISO 1133 and a flow rate ratio FRR$_{21/5}$, being the ratio of MFR$_{21}$ (190°C, 21.6 kg) to MFR$_5$ (190°C, 5 kg), of more than 10 to equal to or less than 40, determined according to ISO 1133, and a viscosity at a constant stress of 747 Pa, eta$_{747Pa}$, of 4,500,000 Pa·s to 10,000,000 Pa·s.

The present invention further provides a polyethylene composition obtainable by a multistage process, the multistage process comprising
a) polymerizing ethylene in the presence of
(i) a silica supported Ziegler Natta catalyst having a molar composition of the catalyst including

| | |
|---|---|
| Al | 1.30 to 1.65 mol/kg silica, |
| Mg | 1.25 to 1.61 mol/kg silica, |
| Ti | 0.70 to 0.90 mol/kg silica, |

and having a mean particle size (D50) of 7 to 15 $\mu$m, preferably 8 to 12 $\mu$m
(ii) in a first loop reactor in the presence of an alkyl aluminium compound and a chain transfer agentfor obtaining a first intermediate material, the first intermediate material having a melt flow rate MFR$_{21}$ (190°C, 21.6 kg) of 0.01 to 1.5 g/10 min, and
b) transferring the first intermediate material to a second loop reactor

(i) feeding ethylene to the second loop reactor
(ii) further polymerizing the first intermediate material

for obtaining a second intermediate material, the second intermediate material having a melt flow rate MFR$_2$ (190°C, 2.16 kg) of 15 to 50 g/10 min; and
c) transferring the second intermediate material to a gas phase reactor

(i) feeding ethylene and comonomer to the gas phase reactor

(ii) further polymerizing the second intermediate material

for obtaining a base resin having a density of more than 946 kg/m$^3$ and equal to or less than 955 kg/m$^3$, determined according to ISO 1183-1:2004, and
d) extruding the base resin in the presence of stabilizers and carbon black into a polyethylene composition having a melt flow rate MFR$_{21}$ (190°C, 21.6 kg) of 1.7 to 7.0 g/10 min, determined according to ISO 1133 and a flow rate ratio FRR$_{21/5}$, being the ratio of MFR$_{21}$ (190°C, 21.6 kg) to MFR$_5$ (190°C, 5 kg), of more than 10 to equal to or less than 40, determined according to ISO 1133, and a viscosity at a constant stress of 747 Pa, eta$_{747Pa}$, of 4,500,000 Pa·s to 10,000,000 Pa·s.

In a further aspect, the present invention is concerned with a process for producing the polyethylene composition according to the present invention, wherein the base resin comprises at least three ethylene homo- or copolymer fractions (A), (B) and (C) being different in their weight average molecular weight Mw, with fraction (A) having the highest weight average molecular weight and fraction (B) having the lowest weight average molecular weight of fractions (A), (B) and (C), and fractions (A), (B) and (C) being polymerized in a multistage process in at least three sequential reactor stages in any order.

In another aspect, the present invention provides an article, particularly a pipe or a pipe fitting, comprising the polyethylene composition according to the present invention.

In yet a further aspect, the present invention is concerned with the use of the inventive polyethylene composition for the production of an article, particularly a pipe.

The catalyst used in the present invention is preferably prepared by the following method:

(i) preparing a magnesium complex by reacting dialkyl magnesium compound of formula $Mg(R)_2$, where each R are the same or different alkyl groups of 1 to 10 C-atoms, preferably 2 to 10 C-atoms, most preferably butyloctyl magnesium, with an alcohol of formula R'OH, where R' is an alkyl group of 2 to 16 C-atoms, preferably 4 to 10 C-atoms, most preferably with 2-ethylhexanol in an aromatic solvent at a molar ratio of 1:1.70 to 1:1.95, preferably 1:1.75 to 1:1.90,

(ii) charging calcinated silica having a mean particle size (D50) in the range of 7 to 15 $\mu$m, preferably of 8 to 12 $\mu$m and an aliphatic hydrocarbon solvent, suitably pentane, into a catalyst preparation reactor,

(iii) adding alkyl aluminium chloride compound of formula $AlR_nX_{3-n}$, wherein R is a $C_1$-$C_{10}$ alkyl group, more preferably a $C_2$-$C_6$ alkyl group and most preferably a $C_2$-$C_4$ alkyl group; X is halogen, preferably chloride and n is 1 or 2, preferably 1, and mixing at a temperature of 10 to 70°C, preferably at 20 to 60°C, most preferably at 40 to 50°C, the aluminium compound is preferably ethylaluminium dichloride,

(iv) adding the magnesium complex prepared in step i) at 20 to 50°C, preferably at 30 to 50°C, most suitably at 40 to 50°C in a ratio of 2.40 to 2.70 mol Mg/kg silica, preferably in a ratio of 2.45 to 2.65 mol Mg/kg silica,

(v) adding additional aliphatic hydrocarbon solvent, preferably pentane, into the reactor and keeping the temperature at above 40°C,

(vi) stirring the mixture for 3 to 5 hours at a temperature of 45 to 55°C,

(vii) adding $TiCl_4$ in an amount of 1.40 to 1.65 mol/kg silica during at least 1 hour at 45 to 55°C to the reactor,

(viii) mixing the catalyst mixture at 50 to 60°C for at least 5 hours, and

(ix) drying the catalyst mixture by vacuum and/or with nitrogen flow.

Additions of Al, Mg and Ti compounds are preferably done within 1 to 3 hours and further preferably after each addition step, the mixture is stirred for additional 1 to 6 hours.

## Brief description of the drawings

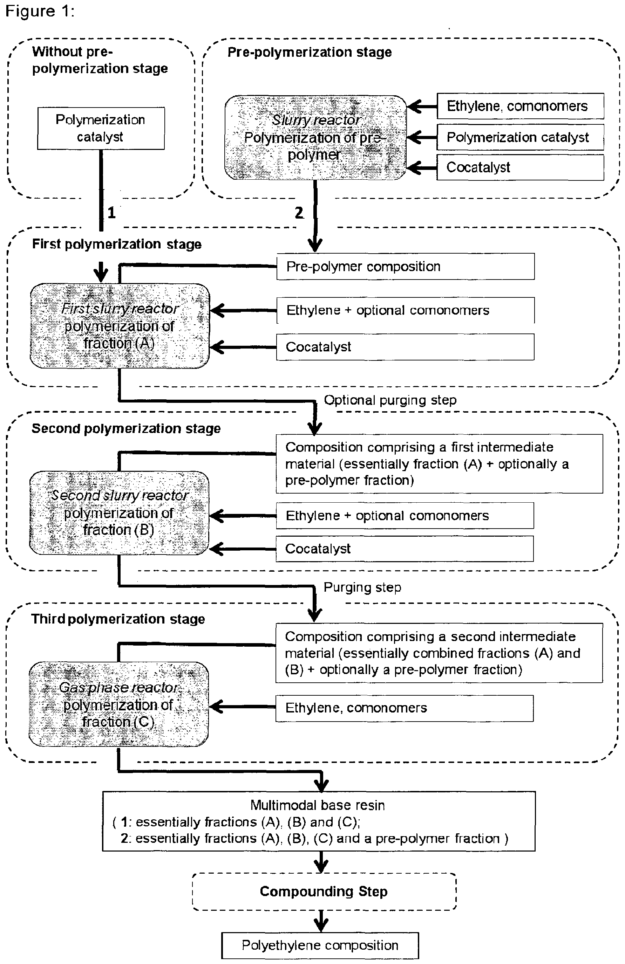

Figure 1 presents an overview of the multistage process according to the present invention.

## Detailed description of the invention

### Definitions

A polyethylene composition according to the present invention denotes a polymer derived from at least 50 mol-% ethylene monomer units and additional comonomer units.

The term 'homopolymer' thereby denotes a polymer consisting essentially of ethylene monomer units. Due to the requirements of large-scale polymerization it may be possible that the ethylene homopolymer includes minor amounts of additional comonomer units, which usually are below 0.05 mol%, preferably below 0.01 mol-% of the ethylene homopolymer. Accordingly, the term 'copolymer' denotes a polymer derived from ethylene monomer units and additional comonomer units in an amount of more than 0.05 mol-%.

Usually, a polyethylene composition comprising at least two polyethylene fractions, which have been produced under different polymerisation conditions resulting in different (weight average) molecular weights for the fractions, is referred to as "multimodal". The prefix "multi" relates to the number of different polymer fractions of the composition consisting of. Thus, for example, a composition consisting of two fractions only is called "bimodal", whereas a composition consisting of three fractions is called "trimodal".

The term 'base resin' denotes the polymeric part of the composition without fillers such as carbon black. A person skilled in the art will understand that the measurements as to the base resin require the presence of stabilizers.

In addition to the base resin, usual additives for utilization with polyolefins, such as pigments (e.g. carbon black), stabilizers (e.g. antioxidant agents), antacids and/or anti-UV's, antistatic agents and utilization agents (such as processing aid agents) may be present in the polyethylene composition. Preferably, the amount of these additives is 10 wt% or below, more preferably 8 wt% or below, most preferably 5 wt% or below, of the composition.

Preferably, the composition comprises carbon black in an amount of 8 wt% or below, more preferably in an amount of 1 to 4 wt%, of the total composition.

Further preferred, the amount of additives different from carbon black is 1 wt% or less, more preferably 0.5 wt% or less.

The 'polydispersity index' PI is a rheological measurement of the broadness of the molecular weight distribution curve.

All rheological measurements can be performed with the base resin and with the composition. As a matter of definition, all rheological properties shall preferably also apply to the base resin.

The term 'catalyst system' shall denote the composition formed by the catalyst and the cocatalyst.

**General**

**Polyethylene composition**

The polyethylene composition is characterized by the following properties:

$MFR_5$

The composition according to the present invention preferably has a melt flow rate $MFR_5$ (190°C, 5 kg) of 0.12 to 0.21 g/10min, more preferably of 0.13 to 0.20 g/10min, even more preferably of 0.14 to 0.18 g/10min and most preferably 0.15 to 0.17 g/10min determined according to ISO 1133.

$MFR_{21}$

The composition according to the present invention has a melt flow rate $MFR_{21}$ (190°C, 21.6 kg) of 1.7 to 7.0 g/10 min, preferably of 3.0 to 6.0 g/10min, more preferably of 3.5 to 5.5 g/10min and most preferably of 4.0 to 5.0 g/10min determined according to ISO 1133.

$FRR_{21/5}$

The composition according to present invention has a flow rate ratio $FRR_{21/5}$, being the ratio of $MFR_{21}$ (190°C, 21.6 kg) to $MFR_5$ (190°C, 5 kg), of more than 10 to equal to or less than 40, preferably of equal to or more than 14 to equal to or less than 34, more preferably of equal to or more than 20 to equal to or less than 30 and most preferably of equal to or more than 24 to equal to or less than 28, determined according to ISO 1133.

*Density*

The composition according to the present invention preferably has a density of more than 960.0 kg/m³ and equal to or less than 968.0 kg/m³, more preferably of equal to or more than 961.0 kg/m³ and equal to or less than 966.0 kg/m³, even more preferably of equal to or more than 961.5 kg/m³ and equal to or less than 964.9 kg/m³ and most preferably of equal to or more than 962.0 kg/m³ and equal to or less than 964.0 kg/m³ determined according to ISO 1183-1:2004.

The density of the composition is influenced by the density of the base resin and can further be adjusted by the amount of filler, usually carbon black, in the composition.

The density of the base resin is mainly influenced by the amount and type of comonomer. In addition to that, the nature of the polymer originating mainly from the catalyst used as well as the melt flow rate play a role. In addition to that, it should be stressed that the comonomer does not need to be a single comonomer. Mixtures of comonomers are also possible.

The composition is further characterized by specific rheological properties.

*PI*

The composition preferably has a polydispersity index PI within the range of equal to or higher than 1.0 Pa$^{-1}$

and less than 3.5 Pa$^{-1}$, more preferably within the range of equal to or higher than 1.5 Pa$^{-1}$ and than 3.0 Pa$^{-1}$ and most preferably within the range of equal to or higher than 1.7 Pa$^{-1}$ and less than 2.5 Pa$^{-1}$.

*SHI$_{2.7/210}$*

The composition preferably has a shear thinning index SHI$_{2.7/210}$ of 10 to 90, more preferably a shear thinning index SHI$_{2.7/210}$ of 20 to 60, even more preferably a shear thinning index SHI$_{2.7/210}$ of 25 to 49 and most preferably a shear thinning index SHI$_{2.7/210}$ of 30 to 40.

The shear thinning index SHI$_{2.7/210}$ can be modified for a given catalyst system by varying the relative amounts of low and high molecular weight material (via split of the reactors) and by varying the molecular weights of the respective low and high molecular weight materials, for example by variation of the chain transfer agent feed. Moreover, different catalyst systems result in a specific intrinsic shear thinning index.

*SHI$_{5/300}$*

The composition according to the present invention preferably has an extrapolated shear thinning index SHI$_{5/300}$ of 25 to 150, more preferably of 35 to 100 and most preferably of 45 to 65.

The shear thinning index SHI$_{5/300}$ can be modified as explained above for the SHI$_{2.7/210}$ shear thinning index. Moreover, the shear thinning index SHI$_{5/300}$ is particularly sensitive to the molecular weight distribution provided intrinsically by a catalyst system.

*G' (2kPa)*

The composition according to the present invention preferably has a storage modulus of G' (2 kPa) of 850 Pa to 1000 Pa, more preferably of 900 Pa to 990 Pa, even more preferably of 925 Pa to 980 Pa and most preferably of 950 Pa to 975 Pa.

The storage modulus is significantly influenced by the amount of very high molecular weight material. Lower values of storage modulus of G' (2 kPa) indicate a narrow molecular weight distribution from qualitative and general point of view.

*G' (5kPa)*

The composition according to the present invention preferably has a storage modulus of G' (5 kPa) of 2400 Pa to 2900 Pa, more preferably 2450 Pa to 2800 Pa, even more preferably 2500 Pa to 2750 Pa and most preferably 2550 Pa to 2700 Pa.

*Complex viscosity eta$_{0.05\ rad/s}$*

The composition according to the present invention preferably has a complex viscosity at 0.05 rad/s, eta*$_{0.05rad/s}$, of 150000 Pa·s to 220000 Pa·s, more preferably 160000 Pa·s to 210000 Pa·s, even more preferably 170000 Pa·s to 200000 Pa·s and most preferably 180000 Pa·s to 190000 Pa·s.

*Complex viscosity eta$_{300\ rad/s}$*

The composition according to the present invention preferably has a complex viscosity at 300 rad/s, eta*$_{300\ rad/s}$, of 1200 Pa·s to 1700 Pa·s, more preferably 1275 Pa·s to 1600 Pa·s, and most preferably 1375 Pa·s to 1500 Pa·s.

*eta$_{747Pa}$*

The composition according to the present invention has a viscosity at a constant stress of 747 Pa, eta$_{747Pa}$, of 4,500,000 Pa·s to 10,000,000 Pa·s, preferably of 6,000,000 Pa·s to 8,000,000 Pa·s and most preferably of 6,500,000 Pa·s to 7,300,000 Pa·s.

Eta$_{747Pa}$ is a measure for the sagging behavior and is significantly influenced by the amount of very high molecular weight material. The higher eta$_{747Pa}$, the lower is the sagging of thick-walled pipes comprising the polyethylene composition.

The rheological properties described above have been determined on the polyethylene composition which may comprise additional components such as carbon black. These properties, however, can also be determined on the base resin. The rheological properties determined on the base resin are preferably in the same ranges as when determined on the polyethylene composition.

*White spot rating (WSR)*

The polyethylene composition according to the present invention preferably has a white spot rating of below 6, more preferably of below 4, even more preferably of below 3 and most preferably of below 2 determined according to ISO 18553/2002-03-01.

The white spot rating test is a measure for the homogeneity of a polyethylene composition and based on ISO 18553/2002-03-01. When compounding polyethylene compositions e.g. for producing pipes, so-called "white spots" occur in the compounded material. These white spots usually have a size of below 10 to about 50 micrometer and consist of non-pigmented, high molecular weight polymer agglomerates/particles that have not been adequately dispersed in the composition. These inhomogeneities in polymer compositions may increase roughness of the surface of articles produced thereof.

It is known that homogeneity of a multimodal polymer composition can be improved by applying multiple compounding steps and/or particular compounding conditions to the resin coming from the reactor. These measures, however, have the disadvantage that they are associated with a significant increase in production costs for the composition.

Thus, the white spot rating of the composition according to the present invention is determined after a single compounding step.

*Charpy notched impact strength (0°C)*

The polyethylene composition according to the present invention preferably has a Charpy notched impact strength (NIS) determined according to ISO 179/ 1eA:2000 at a temperature of 0°C of at least 15.0 kJ/m$^2$, more preferably of at least 20 kJ/m$^2$, even more preferably of at least 25.0 kJ/m$^2$, and most preferably at least 30.0 kJ/m$^2$. The upper limit of the Charpy notched impact strength is usually not higher than 100 kJ/m$^2$, preferably not higher than 80 kJ/m$^2$.

*Tensile modulus (23°C)*

The polyethylene composition according to the present invention preferably has a tensile modulus determined according to ISO 527-2:1993 at a temperature of 23°C of at least 1050 MPa, more preferably of at least 1100 MPa, even more preferably of at least 1125 MPa, and even more preferably of at least 1180 MPa. The upper limit of the tensile modulus at 23°C is usually not higher than 1300 MPa.

*Tensile strain at break*

The polyethylene composition according to the present invention preferably has a tensile strain at break determined according to ISO 527-1 at a temperature of 23°C of at least 350 %, more preferably of at least 400 %, even more preferably of at least 450 %, and most preferably of at least 480 %. The upper limit of the tensile strain at break at 23°C is usually equal to or less than 700 %, more preferably equal to or less than 600 %.

**Base resin**

*Density*

The base resin according to the present invention has a density of more than 946.0 kg/m$^3$ and equal to or less than 955.0 kg/m$^3$, preferably of equal to or more than 948.0 kg/m$^3$ and equal to or less than 953.0 kg/m$^3$, more preferably of equal to or more than 949.0 kg/m$^3$ and equal to or less than 952.5 kg/m$^3$ and most preferably of equal to or more than 950.0 kg/m$^3$ and equal to or less than 952.0 kg/m$^3$ determined according to ISO 1183-1:2004.

*Comonomer content*

In one embodiment of the present invention, the base resin denotes a copolymer of ethylene and at least one alpha-olefin co-monomer unit. The alpha-olefin co-monomer unit preferably is selected from alpha-olefin co-monomer units with 3 to 12 carbon atoms, more preferably 4 to 8 carbon atoms. Suitable alpha-olefin comonomer units are 1-butene, 1-hexene and 1-octene. Thereby, 1-butene and 1-hexene are most preferred.

The base resin according to the present invention preferably has a comonomer content of equal to or more than 0.05 mol-% and equal to or less than 1 mol-%, more preferably of equal to or more than 0.1 mol-% and equal to or less than 0.6 mol-%, and most preferably of equal to or more than 0.15 mol-% and equal to or less than 0.4 mol-%.

Furthermore, the base resin preferably comprises at least three ethylene homo- or copolymer fractions (A), (B) and (C) being different in their weight average molecular weight $M_w$.

Preferably, fractions (A) and (B) are both an ethylene homopolymer and fraction (C) is a copolymer of ethylene and at least one alpha-olefin comonomer unit with 3 to 12 carbon atoms, whereby fraction (A) preferably has a melt flow rate $MFR_{21}$ (190°C, 21.6 kg) of 0.01 to 1.5 g/10 min, more preferably 0.1 to 1.0 g/10 min and most preferably 0.2 to 0.5 g/10 min.

The combined fractions (A) and (B) preferably have a melt flow rate $MFR_2$ (190°C, 2.16 kg) of 15 to 50 g/10 min, more preferably 20 to 45 g/10 min and most preferably 25 to 40 g/10 min.

Thereby, fraction (A) preferably is present in an amount of 2.5 to 15 wt.-%, more preferably in an amount of 4.5 to 12 wt.-%, more preferably in an amount of 5.5 to 10 wt.-% and most preferably in an amount of 6.5 to 8.5 wt.-% with respect to the base resin

The combined fractions (A) and (B) preferably are present in an amount of 50 to 55 wt.-%, more preferably in an amount of 51 to 54 wt.-% and most preferably in an amount of 52 to 53 wt.-% with respect to the base resin.

Fraction (A) of the base resin according to the present invention preferably denotes an ethylene homopolymer characterized by a flow rate $MFR_{21}$ (190°C, 21.6 kg) of 0.01 to 1.5 g/10 min, preferably 0.1 to 1.0 g/10 min and most preferably 0.2 to 0.5 g/10 min. Further, fraction (A) preferably has a density of equal to or more than 970 kg/m$^3$. Fraction (A) preferably is present in an amount of 2.5 to 15 wt.-%, more preferably in an amount of 4.5 to 12 wt.-%, even more preferably in an amount of 5.5 to 10 wt.-% and most preferably in an amount of 6.5 to 8.5 wt.-% with respect to the base resin.

Combined fractions (A) and (B), both preferably being an ethylene homopolymer, preferably have a melt flow rate $MFR_2$ (190°C, 2.16 kg) of 15 to 50 g/10 min, more preferably of 20 to 45 g/10 min and most preferably of 25 to 40 g/10 min. Combined fractions (A) and (B) preferably have a density of equal to or more than 970 kg/m$^3$. Moreover, combined fractions (A) and (B) preferably are present in an amount of 50 to 55 wt.-%, more preferably in an amount of 51 to 54 wt.-% and most preferably in an amount of 52 to 53 wt.-% with respect to the base resin.

Fraction (C) preferably denotes a copolymer of ethylene and at least one alpha-olefin comonomer unit with 3 to 12 carbon atoms. The alpha-olefin co-monomer unit preferably is selected from alpha-olefin co-monomer units with 3 to 12 carbon atoms, more preferably 4 to 8 carbon atoms. Suitable alpha-olefin comonomer units are 1-butene, 1-hexene and 1-octene. Thereby, 1-butene and 1-hexene are most preferred. Fraction (C) preferably has a comonomer content of equal to or more than 0.1 mol-% and equal to or less than 2 mol-%, more preferably of equal to or more than 0.2 mol-% and equal to or less than 1.2 mol-%, and most preferably of equal to or more than 0.3 mol-% and equal to or less than 0.8 mol-%.

Moreover, the base resin according to the present invention may optionally comprise a pre-polymer leading to at least two different preferred embodiments for the base resin according to the present invention.

In a first preferred embodiment, the base resin comprises, preferably consists of fractions (A), (B) and (C) only.

In a second preferred embodiment, the base resin comprises, preferably consists of the pre-polymer and fractions (A), (B) and (C).

In a more preferred embodiment of the present invention, the base resin does not include a pre-polymer, i.e. the first embodiment is preferred. In a further aspect, the present invention relates to a polyethylene composition obtainable by a multistage process, the multistage process comprising

a) polymerizing ethylene in the presence of

(i) a silica supported Ziegler Natta catalyst having a molar composition of the catalyst including

| Al | 1.30 to 1.65 mol/kg silica, preferably 1.33 to 1.63 mol/kg silica, more preferably 1.35 to 1.60 mol/kg silica, |
|---|---|
| Mg | 1.25 to 1.61 mol/kg silica, preferably 1.26 to 1.60 mol/kg silica, more preferably 1.30 to 1.55 mol/kg silica, |
| Ti | 0.70 to 0.90 mol/kg silica, preferably 0.71 to 0.88 mol/kg silica, more preferably 0.72 to 0.85 mol/kg silica, |

and having a mean particle size (D50) of 7 to 15 μm, preferably 8 to 12 μm,

(ii) in a first loop reactor in the presence of an alkyl aluminium compound and a chain transfer agent for obtaining a first intermediate material, the first intermediate material having a melt flow rate $MFR_{21}$ (190°C, 21.6 kg) of 0.01 to 1.5 g/10 min, preferably 0.1 to 1.0 g/10 min and most preferably 0.2 to 0.5 g/10 min, and

b) transferring the first intermediate material to a second loop reactor

(i) feeding ethylene to the second loop reactor

(ii) further polymerizing the first intermediate material

for obtaining a second intermediate material, the second intermediate material having a melt flow rate $MFR_2$ (190°C,

2.16 kg) of 15 to 50 g/10 min, preferably 20 to 45 g/10 min and most preferably 25 to 40 g/10 min, and
c) transferring the second intermediate material to a gas phase reactor

(i) feeding ethylene and comonomer to the gas phase reactor

(ii) further polymerizing the second intermediate material

for obtaining a base resin having a density of more than 946 $kg/m^3$ and equal to or less than 955 $kg/m^3$, determined according to ISO 1183-1:2004, and
d) extruding the base resin in the presence of stabilizers and carbon black into a polyethylene composition having a melt flow rate $MFR_{21}$ (190°C, 21.6 kg) of 1.7 to 7.0 g/10 min, determined according to ISO 1133 and a flow rate ratio $FRR_{21/5}$, being the ratio of $MFR_{21}$ (190°C, 21.6 kg) to $MFR_5$ (190°C, 5 kg), of more than 10 to equal to or less than 40, determined according to ISO 1133, and a viscosity at a constant stress of 747 Pa, $eta_{747Pa}$, of 4,500,000 Pa·s to 10,000,000 Pa·s.

In a preferred embodiment, the first intermediate material obtainable by the multistage process comprises, more preferably consists of fraction (A) of the base resin as defined above and optionally a pre-polymer fraction.

In addition, the second intermediate material obtainable by the multistage process preferably comprises, more preferably consists of combined fractions (A) and (B) of the base resin as defined above and optionally a pre-polymer fraction.

Accordingly, the base resin and the polyethylene composition obtainable in the multistage process preferably correspond to the base resin and the polyethylene composition as defined above.

In another aspect, the present invention is concerned with a process for producing the polyethylene composition according to the present invention, wherein the base resin comprises at least three ethylene homo- or copolymer fractions (A), (B) and (C) being different in their weight average molecular weight $M_w$, with fraction (A) having the highest weight average molecular weight and fraction (B) having the lowest weight average molecular weight of fractions (A), (B) and (C), and fractions (A), (B) and (C) are polymerized in a multistage process in at least three sequential reactor stages in any order.

Preferably, the multistage process for producing a polyethylene composition according to the present invention comprises the following steps:

a) polymerizing ethylene in the presence of
(i) a silica supported Ziegler Natta catalyst having a molar composition of the catalyst including

| | |
|---|---|
| Al | 1.30 to 1.65 mol/kg silica, preferably 1.33 to 1.63 mol/kg silica, more preferably 1.35 to 1.60 mol/kg silica, |
| Mg | 1.25 to 1.61 mol/kg silica, preferably 1.26 to 1.60 mol/kg silica, more preferably 1.30 to 1.55 mol/kg silica, |
| Ti | 0.70 to 0.90 mol/kg silica, preferably 0.71 to 0.88 mol/kg silica, more preferably 0.72 to 0.85 mol/kg silica, |

and having a mean particle size (D50) of 7 to 15 $\mu$m, preferably 8 to 12 $\mu$m,
(ii) in a first loop reactor in the presence of an alkyl aluminium compound and a chain transfer agentfor obtaining a first intermediate material, the first intermediate material having a melt flow rate $MFR_{21}$ (190°C, 21.6 kg) of 0.01 to 1.5 g/10 min, preferably 0.1 to 1.0 g/10 min and most preferably 0.2 to 0.5 g/10 min, and
b) transferring the first intermediate material to a second loop reactor

(i) feeding ethylene to the second loop reactor

(ii) further polymerizing the first intermediate material

for obtaining a second intermediate material, the second intermediate material having a melt flow rate $MFR_2$ (190°C, 2.16 kg) of 15 to 50 g/10 min, preferably 20 to 45 g/10min and most preferably 25 to 40 g/10 min, and
c) transferring the second intermediate material to a gas phase reactor

(i) feeding ethylene and comonomer to the gas phase reactor

(ii) further polymerizing the second intermediate material

for obtaining a base resin having a density of more than 946 $kg/m^3$ and equal to or less than 955 $kg/m^3$, determined according to ISO 1183-1:2004, and
d) extruding the base resin in the presence of stabilizers and carbon black into a polyethylene composition having a

melt flow rate $MFR_{21}$ (190°C, 21.6 kg) of 1.7 to 7.0 g/10 min, determined according to ISO 1133 and a flow rate ratio $FRR_{21/5}$, being the ratio of $MFR_{21}$ (190°C, 21.6 kg) to $MFR_5$ (190°C, 5 kg), of more than 10 to equal to or less than 40, determined according to ISO 1133, and a viscosity at a constant stress of 747 Pa, $eta_{747Pa}$, of 4,500,000 Pa·s to 10,000,000 Pa·s.

In a preferred embodiment of the multistage process for producing the polyethylene composition according to the present invention, the first intermediate material comprises, preferably consists of fraction (A) of the base resin as defined above and optionally a pre-polymer fraction.

In addition, the second intermediate material preferably comprises, more preferably consists of combined fractions (A) and (B) of the base resin as defined above and optionally a pre-polymer fraction.

Accordingly, the base resin and the polyethylene composition obtainable by the multistage process correspond to the base resin and the polyethylene composition as defined above.

In yet a further aspect, the present invention provides an article comprising the polyethylene composition as described above.

The article is preferably a pipe or pipe fitting.

The inventive pipes preferably have a S4 critical temperature of lower than -21.0°C, more preferably of lower than -23.5°C, even more preferably a S4 critical temperature of lower than -28.0°C and most preferably a S4 temperature of -32.0°C or lower.

In addition to the aspects mentioned above, the present invention relates to the use of the polyethylene composition according to the present invention for the production of an article, preferentially a pipe or a pipe fitting.

## Process

The inventive composition for making polyethylene pressure pipes is produced by polymerizing, respectively copolymerizing, ethylene in a reactor cascade formed by at least a first reactor, a second reactor and a third reactor, whereby preferably the first and second reactor are loop reactors and further preferably, the third reactor is a gas phase reactor.

The polymerization applies a silica supported catalyst having a molar composition of the catalyst including Al: 1.30 to 1.65 mol/kg silica, Mg: 1.25 to 1.61 mol/kg silica, and Ti: 0.70 to 0.90 mol/kg silica.

The average particle size of the catalysts used in the field is typically from 10 to 100 $\mu$m. However, according to the present invention, it has turned out that special advantages can be obtained if the catalyst has a mean particle size (D50) from 7 to 15 $\mu$m, preferably from 8 to 12 $\mu$m.

The catalyst particle size is mainly influenced by the particle size of the support material, in the present case silica support material. Thus, suitable support materials for the catalyst used in the present invention are silica support materials having reasonable small particle size, i.e. silica with a mean particle size (D50) below 15 $\mu$m, preferably 7 to 15 $\mu$m, like 8 to 12 $\mu$m. One example of suitable silica support is Sylopol2100 produced and marketed by Grace. The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is the most preferred alcohol.

The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. An especially preferred titanium compound is titanium tetrachloride.

The catalyst can be prepared by sequentially contacting the carrier with the above mentioned compounds as described in EP-A-688794. Alternatively, it can be prepared by first preparing a solution from the components and then contacting the solution with a carrier as described in WO-A-01155230. Preferably the catalyst is prepared according to the general preparation concept as disclosed in EP-A-688794 and described in detail in the present application.

The catalyst as described above is used together with a cocatalyst, also called activator. Suitable cocatalysts are metal alkyl compounds and especially aluminium alkyl compounds. These compounds include alkyl aluminium halides, such as ethylaluminium dichloride, diethylaluminium chloride, ethylaluminium sesquichloride, dimethylaluminium chloride and the like. They also include trialkylaluminium compounds, such as trimethylaluminium, triethylaluminium, tri-isobutylaluminium, trihexylaluminium and tri-n-octylaluminium. Especially preferred cocatalysts are trialkylaluminiums, of which triethylaluminium, trimethylaluminium and tri-isobutylaluminium are particularly used, most preferably triethylaluminium (TEA).

The catalyst as described above is contacted with the cocatalyst as described above. The contacting of the catalyst and the cocatalyst can either be conducted prior to introducing the catalyst into the polymerization reactor, or it can be conducted by introducing the two components separately into the polymerization reactor(s).

In the catalyst system according to the present invention, i.e. the combination of the catalyst and the cocatalyst according to the present invention, the molar ratio between the aluminium in said cocatalyst and the titanium of said catalyst is preferably 20:1 to 5:1, more preferably 15:1 to 7:1 and most preferably 12:1 to 8:1.

**Process details**

The multistage process according to the present invention will be described in detail in the following. Thereby, figure 1 serves to further illustrate the particular process steps.

The temperature in the first reactor, preferably the first slurry phase reactor, more preferably the first loop reactor in the first polymerization stage, is typically from 35 to 75°C, preferably from 45 to 60°C. The pressure is typically from 1 to 150 bar, preferably from 1 to 100 bar.

The temperature in the second reactor, preferably the second slurry phase reactor, more preferably the second loop reactor in the second polymerization stage, is typically from 50 to 115°C, preferably from 60 to 110°C and in particular from 70 to 100°C. The pressure is typically from 1 to 150 bar, preferably from 1 to 100 bar.

The polymerization in the first reactor and in the second reactor may in principle be conducted in any reactor. Preferably, both the first and second reactor are slurry reactors. Such reactors include a continuous stirred tank reactor and a loop reactor. It is especially preferred to conduct the polymerization in a loop reactor, respectively. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

It is sometimes advantageous to conduct the slurry phase polymerization above the critical temperature and pressure of the fluid mixture. Such operations are described in US-A-5,391,654. In such an operation, the temperature is typically at least 85°C, preferably at least 90°C. Furthermore the temperature is typically not higher than 110°C, preferably not higher than 105°C. The pressure under these conditions is typically at least 40 bar, preferably at least 50 bar. Furthermore, the pressure is typically not higher than 150 bar, preferably not higher than 100 bar. In a preferred embodiment, at least one slurry phase polymerization step, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

The slurry may be withdrawn from the first and the second reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants, the fluid which is withdrawn with the polymer evaporates in a flash tank and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages, continuous withdrawal is often preferred.

The continuous withdrawal, on the other hand, has the problem that it typically withdraws the polymer in the same concentration as it is present within the reactor. To reduce the amount of hydrocarbons to be compressed, the continuous outlet is advantageously combined with a suitable concentration device, such as a hydrocyclone or sieve, as disclosed in EP-A-1 415 999 and EP-A-1 591 460. The polymer-rich stream is then directed to a flash and the polymer-lean stream is returned directly into the reactor.

In the first reactor, preferably the first loop reactor, a first intermediate material having a $MFR_{21}$ of 0.01 to 1.5 g/10 min, preferably 0.1 to 1.0 g/10 min and most preferably 0.2 to 0.5 g/10 min is produced at a temperature of 35 to 75°C, preferably of 45 to 60°C and a pressure of 1 to 150 bar, preferably of 1 to 100 bar. Thereby, the first intermediate material comprises, preferably consists of fraction (A) and optionally a pre-polymer fraction.

For adjusting the $MFR_{21}$ of the first intermediate material polymerized in the first reactor (essentially fraction (A)), preferably hydrogen is introduced into the reactor. The hydrogen feed is preferably adjusted to the ethylene feed in order to fulfil a hydrogen to ethylene ratio in the first reactor (first loop reactor) of 1 to 50 mol/kmol, more preferably of 2 to 25 mol/kmol. Fraction (A) is intended to have the highest weight average molecular weight within the final base resin.

The first intermediate material produced in the first reactor (essentially fraction (A)) preferably is an ethylene homopolymer fraction.

If polymerizing a copolymer, comonomers preferably are selected from the group comprising 1-butene, 1-hexene, 4-methyl-1-pentene, 1-octene or their mixtures, especially preferred is 1-hexene. In a preferred embodiment, in the first reactor, an ethylene homopolymer is polymerized so that no comonomer is fed to the first polymerization stage.

The residence time and the polymerisation temperature in the first reactor are adjusted as such as to polymerize the first intermediate material typically in an amount of 2.5 to 15 wt.-%, more preferably in an amount of 4.5 to 12 wt.-%, even more preferably in an amount of 5.5 to 10 wt.-% and most preferably in an amount of 6.5 to 8.5 wt.-% with respect to the base resin.

The first intermediate material produced in the first reactor which comprises, preferably consists of fraction (A) and optionally a pre-polymer fraction, is preferably transferred to in the second reactor, preferably a second loop reactor as shown in figure 1.

Before directing the polymer slurry to the second loop reactor it can be applied to a purging step for substantially removing hydrocarbons from the polymer slurry. It is however, preferred that the first intermediate material is not applied to a purging step.

In the second reactor, preferably the second loop reactor, a second intermediate material having a $MFR_2$ of 15 to 50 g/10 min, preferably of 20 to 45 g/10 min and most preferably of 25 to 40 g/10 min is produced at a temperature of 50 to 115°C, preferably of 60 to 110°C, more preferably of 70 to 100°C and a pressure of 1 to 150 bar, preferably of 1 to 100 bar. Thereby, the second intermediate material comprises, preferably consists of combined fractions (A) and (B) and optionally a pre-polymer fraction.

For adjusting the $MFR_2$ of the polyethylene fraction polymerised in the second reactor (essentially fraction (B) in presence of fraction (A) and optionally a pre-polymer fraction, cf. figure 1), preferably hydrogen is introduced into the reactor. The hydrogen feed is preferably adjusted to the ethylene feed in order to fulfil a hydrogen to ethylene ratio in the second reactor of 250 to 1000 mol/kmol, more preferably of 450 to 700 mol/kmol. Fraction (B) is intended to have the the lowest weight average molecular weight within the final base resin.

The polyethylene fraction produced in the second reactor (essentially fraction (B)) preferably is an ethylene homopolymer fraction.

If polymerizing a copolymer, comonomers preferably are selected from the group comprising 1-butene, 1-hexene, 4-methyl-1-pentene, 1-octene or their mixtures, especially preferred is 1-hexene. In a preferred embodiment, in the first slurry phase reactor, an ethylene homopolymer is polymerized so that no comonomer is fed to this reaction stage.

The residence time and the polymerisation temperature in the second reactor are adjusted as such as to polymerize an ethylene polymer fraction (essentially fraction (B) in presence of fraction (A) and optionally a pre-polymer fraction), typically in an amount of 40 to 50 wt.-%, preferably 42.5 to 47.5 wt.-% with respect to the base resin.

Thus, the second intermediate material which comprises, preferably consists of combined fractions (A) and (B) and optionally a pre-polymer fraction is present in an amount of 50 to 55 wt.-%, preferably in an amount of 51 to 54 wt.-% and most preferably in an amount of 52 to 53 wt.-% with respect to the base resin.

The second intermediate material produced in the second reactor preferably is transferred to a third reactor, preferably a gas phase reactor, for a third polymerization stage as shown in figure 1.

Before directing the polymer slurry to the third reactor it can be applied to a purging step for substantially removing hydrocarbons from the polymer slurry. The purging step is preferably conducted in a flash vessel operated at a pressure of 2 to 10 bar and a temperature of 50 to 100°C. After applying the purging step, the second intermediate material produced in the second reactor preferably is transferred to a third reactor.

The temperature in the third reactor, preferably a fluidized bed gas phase reactor in the third polymerization stage, is typically from 50 to 100°C, preferably from 65 to 90°C. The pressure is typically from 10 to 40 bar, preferably from 15 to 30 bar.

In a fluidized bed gas phase reactor, an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of a fluidization gas comprising the olefin monomer, eventually comonomer(s), eventually chain growth controllers or chain transfer agents, such as hydrogen, and eventually inert gas. The inert gas can thereby be the same or different as the inert gas used in the slurry phase reactor. The fluidization gas is introduced into an inlet chamber at the bottom of the reactor. To make sure that the gas flow is uniformly distributed over the cross-sectional surface area of the inlet chamber, the inlet pipe may be equipped with a flow dividing element as known in the art, e. g. US-A-4,933,149 and EP-A-684 871.

From the inlet chamber the gas flow is passed upwards through the fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087261. Other types of fluidization grids are disclosed, amongst others, in US-A-4,578,879, EP 600 414 and EP-A-721 798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher than the minimum fluidization velocity of the particles contained in the fluidized bed, as otherwise no fluidization would occur. On the other hand, the velocity of the gas should be lower than the onset velocity of the pneumatic transport, as otherwise the whole bed would be entrained with the fluidization gas. The minimum fluidization velocity and the onset velocity of the pneumatic transport can be calculated when the particle characteristics are known by using common engineering practice. An overview is given, amongst others, in Geldart: Gas Fluidisation Technology, J. Wiley & Sons, 1996.

When the fluidization gas is contacted with the bed containing the active catalyst the reactive components of the gas, such as monomers and chain transfer agents, react in the presence of the catalyst to produce the polymer product. At the same time, the gas is heated by the reaction heat.

The unreacted fluidization gas is then removed from the top of the reactor, compressed and recycled into the inlet chamber of the reactor. Prior to the entry into the reactor, fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

After that, the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporization heat then contributes to the removal of the reaction heat. This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293. The condensing agents are non-polymerizable components, such as propane, n-pentane, isopentane, n-butane or isobutane, which are at least partially condensed in the cooler.

The polymeric product may be withdrawn from the gas phase reactor either continuously or intermittently. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The top part of the at least one gas phase reactor may include a so called disengagement zone. In such a zone, the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed levels.

Also antistatic agent(s) may be introduced into the at least one gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes and alcohols.

The reactor may include a mechanical agitator to further facilitate mixing within the fluidized bed. An example of suitable agitator design is given in EP-A-707 513.

For adjusting the melt flow rate of the polyethylene fraction polymerized in the gas phase reactor (essentially fraction (C) in presence of combined fractions (A) and (B) and optionally a pre-polymer fraction, cf. figure 1), hydrogen is introduced into the reactor. The hydrogen feed is preferably adjusted to the ethylene feed in order to fulfill a hydrogen to ethylene ratio in the gas phase reactor of 1 to 30 mol/kmol, more preferably of 3 to 20 mol/kmol, and most preferably of 5 to 15 mol/kmol.

The polyethylene fraction produced in the gas phase reactor (essentially fraction (C)) is an ethylene copolymer fraction. The fluidisation gas stream thus comprises comonomers preferably selected from the group consisting of alpha-olefin comonomer units with 3 to 12 carbon atoms, more preferably with 4 to 8 carbon atoms. Suitable alpha-olefin comonomer units are 1-butene, 1-hexene and 1-octene. Most preferably, 1-hexene is used as comonomer. The comonomer used in the gas phase reactor may be the same or different than that used in the first and/or second loop reactor.

The residence time and the polymerisation temperature in the gas phase reactor are adjusted as such as to polymerize an ethylene copolymer fraction (essentially fraction (C) in presence of combined fractions (A) and (B) and optionally a pre-polymer fraction), typically in an amount of 45 to 50 wt.-%, preferably 46 to 49 wt.-% and most preferably 47 to 48 wt.-% with respect to the base resin.

Further, the final polyethylene base resin emerging from the gas phase reactor, comprising, preferably consisting of fractions (A), (B) and (C) in a first preferred embodiment (1 as shown in figure 1) or fractions (A), (B) and (C), together with a pre-polymer fraction in a second preferred embodiment (2 as shown in figure 1), preferably has a density of more than 946.0 kg/m$^3$ and equal to or less than 955.0 kg/m$^3$, preferably of equal to or more than 948.0 kg/m$^3$ and equal to or less than 953.0 kg/m$^3$, more preferably of equal to or more than 949.0 kg/m$^3$ and equal to or less than 952.5 kg/m$^3$ and most preferably of equal to or more than 950.0 kg/m$^3$ and equal to or less than 952.0 kg/m$^3$ determined according to ISO 1183-1:2004.

In a more preferred embodiment of the present invention, the final polyethylene base resin emerging from the gas phase reactor does not include a pre-polymer fraction, i.e. the first embodiment (1 as shown in figure 1) is preferred.

The catalyst system according to the present invention, i.e. the catalyst and the cocatalyst according to the present invention, is preferably fed to the first polymerization reactor. In case a pre-polymerization step is in use, the catalyst is fed to the pre-polymerization step (cf. figure 1).

Most preferably a pre-polymerization step is not used.

The catalyst may be transferred into the polymerization zone by any means known in the art. It is thus possible to suspend the catalyst in a diluent and maintain it as homogeneous slurry. Especially preferred is to use oil having a viscosity from 20 to 1500 mPa·s as diluent, as disclosed in WO-A-2006/ 063771. It is also possible to mix the catalyst with a viscous mixture of grease and oil and feed the resultant paste into the polymerization zone. Still further, it is possible to let the catalyst settle and introduce portions of thus obtained catalyst mud into the polymerization zone in a manner as disclosed, for instance, in EP-A-428 054.

In one embodiment of the present invention, the process may further comprise a pre-polymerization step which precedes the polymerization steps. The purpose of the pre-polymerization is to polymerize a small amount of polymer onto the catalyst at a low temperature and/or a low monomer concentration. By pre-polymerization it is possible to improve the performance of the catalyst in slurry and/or modify the properties of the final polymer. The pre-polymerization step may be conducted in slurry or gas phase. Preferably, the pre-polymerization is conducted in slurry, preferentially a loop reactor. Thus, the pre-polymerization step may be conducted in a loop reactor. The pre-polymerization is then preferably conducted in an inert diluent, typically a hydrocarbon diluent such as methane, ethane, propane, n-butane, isobutene, pentanes, hexanes, heptanes, octanes etc., or their mixtures. Preferably, the diluent is a low boiling hydrocarbon having from 1 to 4 carbon atoms or a mixture of such hydrocarbons. The most preferred diluent is propane.

The temperature in the pre-polymerization step is typically from 0°C to 90°C, preferably from 20°C to 80°C, more preferably from 40°C to 70°C.

The pressure is not critical and is typically from 1 bar to 150 bar, preferably from 10 bar to 100 bar. The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the pre-polymerization step. However, where the solid catalyst component and the cocatalyst can be fed separately, it is possible that only a part of cocatalyst is introduced into the pre-polymerization stage and the remaining part into the subsequent polymerization stages. Also in such cases it is necessary to introduce as much cocatalyst into the pre-polymerization stage as necessary to obtain a sufficient polymerization reaction (cf. figure 1).

The embodiment including the pre-polymerization step is not preferred. Thus, in a preferred embodiment of the present invention, the process does not include a pre-polymerization step.

The polyethylene composition of the present invention preferably is produced in a multistage process which further comprises a compounding step, wherein the base resin, which is typically obtained as a base resin powder from the reactor, is extruded in an extruder and then pelletized to polymer pellets in a manner known in the art to form the polyethylene composition of the invention.

Optionally, additives or other polymer components can be added to the base resin during the compounding step in an amount as described above.

It is preferred that the addition of further polymer components is limited to an amount of less than 3 wt.-%, preferably less than 2 wt.-% with respect to the total polyethylene composition according to the present invention.

Preferably, the base resin of the invention obtained from the reactor is compounded in the extruder together with additives in a manner known in the art.

The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one embodiment, the extrusion step is carried out using feed rates of 200 kg/h to 600 kg/h, more preferably 250 kg/h to 400 kg/h in pilot production scale. Preferably, the throughput is typically from 10 to 50 tons/h in commercial production.

The following conditions apply to both, the pilot production scale and the commercial production. The screw speed of the extruder is preferably 300 rpm to 500 rpm, more preferably 350 rpm to 450 rpm.

Preferably, in said extrusion step, the SEI (specific energy input) of the extruder is 200 kWh/ton to 300 kWh/ton, more preferably 220 kWh/ton to 280 kWh/ton, whereby the SEI is directly calculated from the electric input of the extruder ignoring the intrinsically limited effectiveness.

The melt temperature in said extrusion step is preferably 220°C to 320°C, more preferably 250°C to 290°C.

Preferably the temperatures at the zones of an extruder having 4 zones are set as follows. Zone 1 is preferably set to 80 to 120°C. Zone 2 is preferably set to 180 to 220°C. Zone 3 is preferably set to 230 to 270°C. Zone 4 is preferably set to 160 to 200°C. More preferably the 4 zones are set as follows:

Zone 1 from 90 to 110°C; zone 2 from 190 to 210°C; zone 3 from 240 to 260°C; and zone 4 from 170 to 190°C.

Furthermore, the present invention relates to an article, preferably a pipe or pipe fitting, comprising a polyethylene composition as described above or obtainable by a process as described above, and to the use of such a polyethylene composition for the production of an article, preferably a pipe.

**Pipe production**

Polymeric pipes are generally manufactured by extrusion or, to a small extent, by injection moulding. A conventional plant for extrusion of polymer pipes comprises an extruder, a die-head, a calibrating device, a cooling equipment, a pulling device, and a device for cutting and/or for coiling up the pipe.

The manufacture of polyethylene materials for use in pressure pipes is discussed in an article by Scheirs et al (Scheirs, Böhm, Boot and Leevers: PE100 Resins for Pipe Applications, TRIP Vol. 4, No. 12 (1996) pp. 408-415). The authors discuss the production technology and properties of PE100 pipe materials. They point out the importance of proper comonomer distribution and molecular weight distribution in order to optimize slow crack growth and rapid crack propagation.

**Examples:**

1. Definitions

a) Melt Flow Rate

The melt flow rate (MFR) is determined according to IS0 1133 and is indicated in g/10 min. The MFR is an indication of the flowability, and hence the processability, of the polymer. The higher the melt flow rate, the lower the viscosity of the polymer. The $MFR_5$ of polyethylene is measured at a temperature of 190°C and a load of 5 kg, the $MFR_2$ of polyethylene at a temperature of 190°C and a load of 2.16 kg and the $MFR_{21}$ of polyethylene is measured at a temperature of 190°C and a load of 21.6 kg. The quantity FRR (flow rate ratio) denotes the ratio of flow rates at different loads. Thus, $FRR_{21/5}$ denotes the value of $MFR_{21}/MFR_5$.

b) Density

Density of the polymer was measured according to ISO 1183-1:2004 Method A on compression moulded specimen prepared according to EN ISO 1872-2 (Feb 2007) and is given in $kg/m^3$.

c) Comonomer content

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$, respectively. All spectra were recorded using a $^{13}C$ optimized 7 mm magic-angle spinning (MAS) probehead at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {[1], [2], [6]}. Standard single-pulse excitation was employed utilizing the transient NOE at short recycle delays of 3 s {[1], [3]) and the RSHEPT decoupling scheme {[4], [5]}. A total of 1024 (1k) transients were acquired per spectrum. This setup was chosen due to its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm {[9]}.

Characteristic signals corresponding to the incorporation of 1-hexene were observed {[9]} and all contents calculated with respect to all other monomers present in the polymer.

$$H = I_{*B4}$$

With no other signals indicative of other comonomer sequences, i.e. consecutive comonomer incorporation, observed the total 1-hexene comonomer content was calculated based solely on the amount of isolated 1-hexene sequences:

$$H_{total} = H$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)^*(I_{2S} + I_{3S})$$

The relative content of ethylene was quantified using the integral of the bulk methylene ($\delta+$) signals at 30.00 ppm:

$$E = (1/2)^*I_{\delta+}$$

The total ethylene comonomer content was calculated based on the bulk methylene signals and accounting for ethylene units present in other observed comonomer sequences or end-groups:

$$E_{total} = E + (5/2)^*B + (3/2)^*S$$

The total mole fraction of 1-hexene in the polymer was then calculated as:

$$fH = ( H_{total} / ( E_{total} + H_{total} )$$

The total comonomer incorporation of 1-hexene in mole percent was calculated from the mole fraction in the usual manner:

$$H [mol-\%] = 100 * fH$$

The total comonomer incorporation of 1-hexene in weight percent was calculated from the mole fraction in the standard manner:

$$H [wt.-\%] = 100 * (fH * 84.16) / ( (fH * 84.16) + ((1-fH) * 28.05) )$$

References:

[1] Klimke, K., Parkinson, M., Piel, C., Kaminsky, W., Spiess, H.W., Wilhelm, M., Macromol. Chem. Phys. 2006; 207:382.

[2] Parkinson, M., Klimke, K., Spiess, H.W., Wilhelm, M., Macromol. Chem. Phys. 2007; 208:2128.

[3] Pollard, M., Klimke, K., Graf, R., Spiess, H.W., Wilhelm, M., Sperber, O., Piel, C., Kaminsky, W., Macromolecules 2004; 37:813.

[4] Filip, X., Tripon, C., Filip, C., J. Mag. Reson. 2005, 176, 239.

[5] Griffin, J.M., Tripon, C., Samoson, A., Filip, C., and Brown, S.P., Mag. Res. in Chem. 2007, 45, S1, S198.

[6] Castignolles, P., Graf, R., Parkinson, M., Wilhelm, M., Gaborieau, M., Polymer 50 (2009) 2373.

[7] Zhou, Z., Muemmerle, R., Qiu, X., Redwine, D., Cong, R., Taha, A., Baugh, D. Winniford, B., J. Mag. Reson. 2007, 187, 225.

[8] Busico, V., Carbonniere, P., Cipullo, R., Pellecchia, R., Severn, J., Talarico, G., Macromol. Rapid Commun. 2007, 28, 1128.

[9] J. Randall, Macromol. Sci., Rev. Macromol. Chem. Phys. 1989, C29, 201.

d) <u>Rheological parameters</u>

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G'', the complex shear modulus, G\*, the complex shear viscosity, $\eta$\*, the dynamic shear viscosity, $\eta$', the out-of-phase component of the complex shear viscosity, $\eta$'' and the loss tangent, tan $\eta$, which can be expressed as follows:

$$G' = \frac{\sigma_0}{\gamma_0} \cos\delta \ [Pa] \qquad (3)$$

$$G'' = \frac{\sigma_0}{\gamma_0} \sin\delta \ [Pa] \qquad (4)$$

$$G^* = G' + iG'' \ [Pa] \qquad (5)$$

$$\eta^* = \eta' - i\eta'' \ [Pa \cdot s] \qquad (6)$$

$$\eta' = \frac{G''}{\omega} \ [Pa \cdot s] \qquad (7)$$

$$\eta'' = \frac{G''}{\omega} \ [\text{Pa·s}] \qquad\qquad (8)$$

The determination of so-called Shear Thinning Index, which correlates with MWD and is independent of Mw, is done as described in equation 9.

$$\text{SHI}_{(x/y)} = \frac{\text{Eta* for } (G^* = x \ \text{kPa})}{\text{Eta* for } (G^* = y \ \text{kPa})} \qquad\qquad (9)$$

For example, the $\text{SHI}_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity ($\eta^*$) were obtained as a function of frequency ($\omega$).

Thereby, e.g. $\eta^*_{300\text{rad/s}}$ (eta*$_{300\text{rad/s}}$) is used as abbreviation for the complex viscosity at the frequency of 300 rad/s and $\eta^*_{0.05\text{rad/s}}$ (eta*$_{0.05\text{rad/s}}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $\tan_{0.05}$ is used as abbreviation for the ratio of the loss modulus (G") and the storage modulus (G') at 0.05 rad/s and $\tan_{300}$ is used as abbreviation for the ratio of the loss modulus (G") and the storage modulus (G') at 300 rad/s.

The elasticity balance $\tan_{0.05}/\tan_{300}$ is defined as the ratio of the loss tangent $\tan_{0.05}$ and the loss tangent $\tan_{300}$.

Besides the above mentioned rheological functions one can also determine other rheological parameters such as the so-called elasticity index *EI(x)*. The elasticity index *EI(x)* is the value of the storage modulus (G') determined for a value of the loss modulus (G") of x kPa and can be described by equation 10.

$$EI(x) = G' \ for \ (G'' = x \ kPa) \ [\text{Pa}] \qquad\qquad (10)$$

For example, the E/(5kPa) is the defined by the value of the storage modulus (G'), determined for a value of G" equal to 5 kPa.

The viscosity $\text{eta}_{747}$ is measured at a very low, constant shear stress of 747 Pa and is inversely proportional to the gravity flow of the polyethylene composition, i.e. the higher $\text{eta}_{747}$ the lower the sagging of the polyethylene composition.

The polydispersity index, *PI,* is defined by equation 11.

$$PI = \frac{10^5}{G'(\omega_{COP})} \ , \qquad\qquad \omega_{COP} = \omega \ for \ (G' = G'') \qquad\qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol., 11th (1992), 1, 360-362.

[2] "The influence of molecular structure on some rheological properties of polyethylene", Heino, E.L., Borealis Polymers Oy, Porvoo, Finland, Annual Transactions of the Nordic Rheology Society, 1995.

[3] "Definition of terms relating to the non-ultimate mechanical properties of polymers", Pure & Appl. Chem., Vol. 70, No. 3, pp. 701-754, 1998.

e) *Measure of homogeneity/ White spot rating (WSR)*

The white spot rating of the compounded composition is determined according to ISO 18 553/2002-03-01 as follows:

Pellets of the composition which are obtained after a single compounding step are analysed by collecting 6 different pellets where from each pellet, one cut is used (thickness cut $20\pm2$ $\mu$m). The cut for the measurement of the white spot rating should be taken near the middle of the pellet (sample) with rotation microtome Type Leica RM2265. Preferably, the cut is in flow direction of the melt through the whole of the pelletizer.

The cuts are evaluated at a magnification of 100x and the size and the number of the non-coloured inclusions ("white-spots" = non-pigmented, high molecular weight agglomerates/particles in the polymer) on the total area of each cut are determined. All white spots with a diameter of > 5 $\mu$m are counted. Transmission light microscope Olympus BX41 with XYZ motorised stage from Märzhäuser and particle inspector Software from Olympus was used.

The white spot rating test "homogeneity" is based on the ISO 18553/2002-03-01. In this test, inhomogeneities of the composition, present after a single compounding step as described above, which appear as white spots, are determined and rated according to the rating scheme given in ISO 18553/2002-03-01. The lower the composition is rated (less amount of high molecular weight particles) in this test, the better is the homogeneity of the composition.

f) Tensile modulus and tensile properties

As a measure for stiffness, the tensile modulus (E-modulus) of the compositions was measured at 23°C on compression molded specimens according to ISO 527-2:1993. The specimens (1B type) were cut from plaques of 4 mm thickness prepared by compression molding according to ISO 293:2004 using the conditions defined in chapter 3.3 of ISO 1872-2:2007. The modulus was measured at a speed of 1 mm/min.

The tensile strain at break (in %) was determined on the same samples according to ISO 527-1. The measurement was conducted at 23°C with an elongation rate (cross head speed) of 50 mm/min.

g) Charpy impact strength

Charpy impact strength was determined according to ISO 179/1eA:2000 on V-notched samples of 80*10*4 mm at 0°C (Charpy impact strength (0°C)). Samples were milled from plaques of 4 mm thickness prepared by compression moulding according to ISO 293:2004 using the conditions defined in chapter 3.3 of ISO 1872-2:2007

h) Pipe Small Scale Steady State Test (S4-Test) - Rapid Crack Propagation (RCP)

The rapid crack propagation (RCP) resistance of a pipe may be determined according to a method called the S4 test (Small Scale Steady State), which has been developed at Imperial College, London, and which is described in ISO 13477:2008. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. The length of the pipe is 785 mm. While the exterior of the pipe is at ambient pressure (atmospheric pressure), the pipe is pressurized internally, and the internal pressure in the pipe is kept constant at a pressure of 4.0 bar positive pressure. The length of the gauge is 590 mm. The pipe and the equipment surrounding it are conditioned to a predetermined temperature. A number of discs have been mounted on a shaft inside the pipe to prevent decompression during the tests. A knife projectile is shot, with well-defined forms, and a mass of 1500 g towards the pipe close to its one end in the so-called initiating zone in order to start a rapidly running axial crack. The speed of the knife is 16 +/- 1 m/s. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test where the crack propagation exceeds 4.7 times the pipe diameter. The critical temperature ($T_{crit}$) i.e. the ductile brittle transition temperature as measured according to ISO 13477:2008 is the lowest temperature at which the pipe passes the test. A lower critical temperature results in an extension of the applicability of the pipe.

i) Mg, Al and Ti content / ICP analysis

The elemental analysis of a catalyst was performed by taking a solid sample of mass, M. Samples were diluted up to a known volume, V, by dissolving in nitric acid ($HNO_3$, 65 %, 5 % of V) and freshly deionised (DI) water (5 % of V).

The solution was further treated with hydrofluoric acid (HF, 40 %, 3 % of V) and diluted with DI water up to the final volume, V, and left to stabilize for two hours.

The analysis was run at room temperature using a Thermo Elemental iCAP 6300 Inductively Coupled Plasma - Optical Emission Spectrometer (ICP-OES) which was calibrated using a blank (a solution of 5 % $HNO_3$ and 3 % HF), and standards of 0.5 ppm, 1 ppm, 10 ppm, 50 ppm, 100 ppm and 300 ppm of Al, Mg and Ti in solutions of 5 % $HNO_3$ and 3 % HF.

Immediately before analysis the calibration is 'resloped' using the blank and 100 ppm standard, a quality control sample (20 ppm Al, Mg and Ti in a solution of 5 % $HNO_3$, 3 % HF in DI water) is run to confirm the reslope. The QC sample is also run after every $5^{th}$ sample and at the end of a scheduled analysis set.

The content of Mg was monitored using the 285.213 nm line and the content for Ti using 336.121 nm line. The content of aluminium was monitored via the 167.079 nm line, when the Al concentration in the ICP sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

j) Particle size of the catalyst

Particle size is measured by Coulter Counter LS 200 at room temperature with n-heptane as medium.

2. Materials

a) Preparation of the catalyst

*Complex preparation:*

87 kg of toluene were added into the reactor. Then 45.5 kg Bomag A (butyloctyl magnesium) in heptane were also added in the reactor. 161 kg 99.8 % 2-ethyl-1-hexanol were then introduced into the reactor at a flow rate of 24 to 40 kg/h. The molar ratio between BOMAG-A and 2-ethyl-1-hexanol was 1: 1.83.

*Solid catalyst component preparation:*

330 kg silica (calcined silica, Sylopol® 2100) and pentane (0.12 kg/kg carrier) were charged into a catalyst preparation reactor. Then EADC (Ethylaluminium dichloride) (2.66 mol/kg silica) was added into the reactor at a temperature of below 40°C during two hours and mixing was continued for one hour. The temperature during mixing was 40 to 50°C. Then the Mg complex prepared as described above was added (2.56 mol Mg/kg silica) at 50°C during two hours and mixing was continued at 40 to 50°C for one hour. 0.84 kg pentane/kg silica was added into the reactor and the slurry was stirred for 4 hours at the temperature of 40 to 50°C. Finally, $TiCl_4$ (1.47 mol/kg silica) was added during at least 1 hour at 55 °C to the reactor. The slurry was stirred at 50 to 60 °C for five hours. The catalyst was then dried by purging with nitrogen.

Molar composition of the ready catalyst component is:
Al/Mg/Ti = 1.5/1.4/0.8 (mol/kg silica).

b) Multi-stage polymerization of inventive example IE1

A first loop reactor having a volume of 50 $dm^3$ was operated at 50°C and 60 bar pressure. Into the first loop reactor were introduced 40 kg/h of propane diluent, ethylene and a gas mixture containing 25 vol.-% of hydrogen in nitrogen with the feed rates as given in Table 1. In addition, a polymerization catalyst prepared according to the description above was introduced into the reactor at a rate as given in Table 1. TEA used as cocatalyst was also fed to the loop reactor. No comonomer was introduced into the reactor. Conditions in the first loop reactor are shown in Table 1.

The polymer slurry was withdrawn from the first loop reactor and transferred to a second loop reactor having a volume of 500 $dm^3$. The second loop reactor was operated at a temperature of 95°C and a pressure of 54 bar. Into the second loop reactor were introduced 100 kg/h of propane diluent, ethylene and a gas mixture containing 25 vol.-% of hydrogen in nitrogen with the feed rates as given in Table 1. No further TEA used as cocatalyst and no additional comonomer were introduced into the reactor. Conditions in the second loop reactor are shown in Table 1.

Subsequently, the polymer slurry was withdrawn from the second loop reactor and transferred into a flash vessel operated at 3 bar pressure and 70 °C temperature where the hydrocarbons were substantially removed from the polymer.

The polymer was then introduced into a gas phase reactor operated at a temperature of 85°C and a pressure of 20 bar. The polymerization was continued with the conditions shown in Table 1.

The resulting polymer was stabilized with 2200 ppm of Irganox B225 and 1500 ppm Ca-stearate and 2.3 % of carbon black, based on the final composition. For the addition of carbon black, a masterbatch containing 39.5 wt.% carbon black (Elftex TP, distributed by Cabot), 0.1 wt.% Irganox 1010 (from Ciba, now part of BASF) and 60.4 wt.% ethylene-butylene copolymer having a comonomer content of 1.7 wt.%, an $MFR_2$ (2.16 kg, 190°C, ISO 1133) of 30 g/10 min and a density of 959 kg/m$^3$, in an amount of 5.7 wt% has been used. The resulting polymer was then extruded to pellets in a counter-rotating twin screw extruder CIM90P (manufactured by Japan Steel Works). The conditions are given in Table 1.

c) Comparative examples CE1 to CE3

*Comparative example CE1*

A loop reactor having a volume of 500 dm$^3$ was operated at 95°C and 58 bar pressure. Into the reactor were introduced 117 kg/h of propane diluent, ethylene and a gas mixture containing 25 vol.-% of hydrogen in nitrogen with the feed rates as given in Table 1. In addition, a polymerization catalyst prepared according to the description above was introduced into the reactor at a rate as given in the Table 1. TEA used as cocatalyst was also fed to the loop reactor. No comonomer was introduced into the reactor. Conditions in the reactor are shown in Table 1.

The polymer slurry was withdrawn from the loop reactor and transferred into a flash vessel operated at 3 bar pressure and 70°C temperature where the hydrocarbons were substantially removed from the polymer. The polymer was then introduced into a gas phase reactor operated at a temperature of 85°C and a pressure of 20 bar.

The polymerization was continued with the conditions shown in Table 1.

The resulting polymer was stabilized with 2200 ppm of Irganox B225 and 1500 ppm Ca-stearate and 2.3 % of carbon black, based on the final composition. For the addition of carbon black, a masterbatch containing 39.5 wt.% carbon black (Elftex TP, distributed by Cabot), 0.1 wt.% Irganox 1010 (from Ciba, now part of BASF) and 60.4 wt.% ethylene-butylene copolymer having a comonomer content of 1.7 wt.%, an $MFR_2$ (2.16 kg, 190°C, ISO 1133) of 30 g/10 min and a density of 959 kg/m$^3$, in an amount of 5.7 wt% has been used. The resulting polymer was then extruded to pellets in a counter-rotating twin screw extruder CIM90P (manufactured by Japan Steel Works). The conditions are given in Table 1.

*Comparative example CE2*

The reaction sequence as described above was repeated with the difference that a pre-polymerization step was added. Catalyst and cocatalyst TEA were fed to the pre-polymerization vessel.

*Comparative example CE3*

A blend of the commercial bimodal HDPE HE3490-LS-H from Borealis and 10 wt.% of a UHMW PE homopolymer purchased from Jingchem Corporation ($MFR_{21}$ of 0.03 g/ 10 min, density of 934 kg/m$^3$, Mv of 1,150,000 g/mol determined according to ASTM4020-81)) was prepared using conventional extrusion conditions with a co-rotating twin screw extruder. Extrusion was carried out at 230 to 240°C and 120 rpm. The properties of the corresponding blend are given in table 1.

Table 1: Polymerization conditions and properties of inventive example IE3 and comparative examples CE1 to CE3.

|  | IE1 | CE1 | CE2 | CE3 |
|---|---|---|---|---|
| Cocatalyst | TEA | TEA | TEA |  |
| **Pre-polymerizer** | not in use | off | on |  |
| Temperature [°C] |  |  | 60 |  |
| Pressure [bar] |  |  | 62 |  |
| Catalyst feed [g/h] |  |  | 8.3 |  |
| Cocatalyst feed [g/h] |  |  | 4.1 |  |
| Al/Ti [mol/mol] |  |  | 11 |  |
| $C_2$ feed [kg/h] |  |  | 2.0 |  |
| $H_2$ feed [g/h] |  |  | 3.9 |  |

(continued)

|  | IE1 | CE1 | CE2 | CE3 |
|---|---|---|---|---|
| C$_3$ feed [g/h] |  |  | 50 |  |
| Production rate [kg/h] |  |  | 1.9 |  |
| Split [wt.-%] |  |  | 2.7 |  |
|  |  |  |  |  |
|  | IE1 | CE1 | CE2 | CE3 |
| **1$_{st}$ Loop reactor** |  |  |  |  |
| Temperature [°C] | 50 | 95 | 95 |  |
| Pressure [bar] | 60 | 58 | 58 |  |
| Catalyst feed [g/h] | 10.0 | 10.8 | 0.0 |  |
| Cocatalyst feed [g/h] | 8.0 | 9.3 | 0.0 |  |
| Al/Ti [mol/mol] | 11 | 10 | 10 |  |
| C$_2$ feed [kg/h] | 8.0 | 39 | 38 |  |
| H$_2$ feed [g/h] | 1.0 | 113 | 114 |  |
| C$_3$ feed [kg/h] | 40 | 117 | 120 |  |
| H$_2$/C$_2$ ratio [mol/kmol] | 9.7 | 468 | 522 |  |
| C$_2$-concentration [mol-%] | 4.4 | 3.6 | 3.4 |  |
| Split [wt.-%] | 7.3 | 52.0 | 49.9 |  |
| MFR$_{21}$ [g/10 min] | 0.4 | n.d. | n.d. |  |
| MFR$_2$ [g/10 min], Half die | n.d. | 456 | 576 |  |
|  |  |  |  |  |
|  | IE1 | CE1 | CE2 | CE3 |
| **2$^{nd}$ Loop reactor** |  | not in use | not in use |  |
| Temperature [°C] | 95 |  |  |  |
| Pressure [bar] | 54 |  |  |  |
| Cocatalyst feed [g/h] | 0.0 |  |  |  |
| C$_2$ feed [kg/h] | 40 |  |  |  |
| H$_2$ feed [g/h] | 90 |  |  |  |
| C$_3$ feed [kg/h] | 100 |  |  |  |
| H$_2$/C$_2$ ratio [mol/kmol] | 568 |  |  |  |
| C$_2$-concentration [mol-%] | 2.8 |  |  |  |
| Split [wt.-%] | 45 |  |  |  |
| MFR$_2$ [g/10 min] | 35 |  |  |  |
|  |  |  |  |  |
|  | IE1 | CE1 | CE2 | CE3 |
| **Gas phase reactor** |  |  |  |  |
| Temperature [°C] | 85 | 85 | 85 |  |
| Pressure [bar] | 20 | 20 | 20 |  |
| Cocatalyst feed [g/h] | 0 | 0 | 0 |  |

(continued)

| | IE1 | CE1 | CE2 | CE3 |
|---|---|---|---|---|
| **Gas phase reactor** | | | | |
| $C_2$ feed [kg/h] | 59 | 37 | 37 | |
| $H_2$ feed [g/h] | 7.6 | 0.97 | 1.36 | |
| $C_6$ feed [kg/h] | 1.6 | 0.94 | 1.05 | |
| $H_2/C_2$ ratio [mol/kmol] | 10.0 | 4.13 | 4.88 | |
| $C_6/C_2$ ratio [mol/kmol] | n.d. | 23.7 | 23.9 | |
| $C_6/C_2$ feed ratio [g/kg$_{PE}$] | 27 | 25 | 28 | |
| $C_2$-concentration [mol-%] | 11.9 | 7.2 | 8.0 | |
| Split [wt.-%] | 47.7 | 48.0 | 47.4 | |
| Density [kg/m$^3$] | 950.2 | 952.7 | 951.3 | |
| $C_6$ content [wt.-%] | 0.5 | 0.7 | 0.5 | |
| | | | | |
| | IE1 | CE1 | CE2 | CE3 |
| Compounding | | | | |
| Feed [kg/h] | 322 | 208 | 220 | |
| Screw Speed [rpm] | 400 | 330 | 349 | |
| SEI [kWh/ton](consumed electric energy) | 233 | 214 | 218 | |
| Melt temperature [°C] | 273 | 254 | 253 | |
| Zone 1 temperature [°C] | 100 | 100 | 100 | |
| Zone 2 temperature [°C] | 200 | 200 | 200 | |
| Zone 3 temperature [°C] | 250 | 250 | 250 | |
| Zone 4 temperature [°C] | 180 | 180 | 180 | |
| **Composition properties** | | | | |
| Density [kg/m$^3$] | 963.2 | 964,0 | 965.8 | 960 |
| PI [Pa$^{-1}$] | 2.2 | 3.7 | 3.9 | 3.5 |
| complex viscosity eta at 0.05 rad/s [Pa·s] | 185100 | 235400 | 251200 | 260900 |
| complex viscosity eta at 300 rad/s [Pa·s] | 1428 | 1163 | 1165 | 1385 |
| Eta$_{747}$ [Pa·s] | $70·10^5$ | $7.3·10^5$ | $9.0·10^5$ | $5.5·10^5$ |
| G' (5 kPa) [Pa] | 2640 | 2867 | 3096 | 2879 |
| G' (2 kPa) [Pa] | 971 | 979 | 991 | 950 |
| SHI$_{2.7/210}$ | 34 | 94 | 113 | 60 |
| SHI$_{5/300}$ | 60 | 197 | 228 | 110 |
| MFR$_5$ [g/10 min] | 0.16 | 0.18 | 0.18 | 0.1 |
| MFR$_{21}$ [g/10 min] | 4.3 | 9.0 | 8.9 | 4.4 |
| FRR$_{21/5}$ | 27 | 50 | 49 | 44 |
| White Spot Rating | 1.8 | 6.4 | 10.8 | 4.4 |

(continued)

| Composition properties | | | | |
|---|---|---|---|---|
| Tensile modulus (23°C) [MPa] | 1180 | 1243 | 1260 | 1102 |
| Tensile stress at yield (23°C) [MPa] | 27.3 | 28 | 28 | 25.9 |
| Tensile strain at yield (23°C) [%] | 9.3 | 9 | 8 | 9 |
| Tensile strength (23°C) [MPa] | 35.3 | 28 | 28 | 27.9 |
| Tensile stress at break (23°C) [MPa] | 35.2 | 16 | 19 | 25.4 |
| Tensile strain at break (23°C) [%] | 482 | 401 | 509 | 520 |
| Charpy Notch Impact strength (0°C) [kJ/m$^2$] | 30.3 | 20.6 | 19.3 | 33 |
| S4 Tc [°C] | -32 | -23.1 | -22.4 | n.d. |
| S4 rating | ++ | ++ | ++ | n.d. |
| n.d. = not determined | | | | |

**Claims**

1. A polyethylene composition comprising
   a base resin having a density of more than 946.0 kg/m$^3$ and equal to or less than 955.0 kg/m$^3$, determined according to ISO 1183-1:2004,
   wherein the composition has a melt flow rate $MFR_{21}$ (190°C, 21.6 kg) of 1.7 to 7.0 g/10 min, determined according to ISO 1133, a flow rate ratio $FRR_{21/5}$, being the ratio of $MFR_{21}$ (190°C, 21.6 kg) to $MFR_5$ (190°C, 5 kg), of more than 10 to equal to or less than 40, determined according to ISO 1133, and a viscosity at a constant stress of 747 Pa, $eta_{747Pa}$, of 4,500,000 Pa·s to 10,000,000 Pa·s.

2. The polyethylene composition according to claim 1, wherein the composition has a shear thinning index $SHI_{2,7/210}$ of 10 to 90.

3. The polyethylene composition according to any of the preceding claims, wherein the composition has a polydispersity index PI within the range of equal to or higher than 1.0 Pa$^{-1}$ and less than 3.5 Pa$^{-1}$.

4. The polyethylene composition according to any of the preceding claims wherein the base resin has a content of units derived from alpha-olefins having 3 to 12 carbon atoms of from equal to or more than 0.05 mol-% to equal to or less than 1 mol-%.

5. The polyethylene composition according to any of the preceding claims having a melt flow rate $MFR_5$ (190°C, 5 kg) of 0.12 to 0.21 g/10min, determined according to ISO 1133.

6. The polyethylene composition according to any of the preceding claims, wherein the composition has a white spot rating of below 6, determined according to ISO 18553/200-03-01.

7. The polyethylene composition according to any of the preceding claims, wherein the base resin comprises at least three ethylene homo- or copolymer fractions (A), (B) and (C) being different in their weight average molecular weight $M_w$,
   wherein fractions (A) and (B) are both an ethylene homopolymer and fraction (C) is a copolymer of ethylene and at least one alpha-olefin comonomer units with 3 to 12 carbon atoms,
   whereby fraction (A) has a melt flow rate $MFR_{21}$ (190°C, 21.6 kg) of 0.01 to 1.5 g/10min,
   the combined fractions (A) and (B) have a melt flow rate $MFR_2$ (190°C, 2.16 kg) of 15 to 50 g/10min, and
   wherein fraction (A) is present in an amount of 2.5 to 15 wt.-% with respect to the base resin,
   and combined fractions (A) and (B) are present in an amount of 50 to 55 wt.-% with respect to the base resin.

8. A polyethylene composition obtainable by a multistage process, the multistage process comprising

a) polymerizing ethylene in the presence of

(i) a silica supported Ziegler Natta catalyst having a molar composition of the catalyst including

|    |    |
|----|----|
| Al | 1.30 to 1.65 mol/kg silica, |
| Mg | 1.25 to 1.61 mol/kg silica, |
| Ti | 0.70 to 0.90 mol/kg silica, |

and having a mean particle size (D50) of 7 to 15 $\mu$m, preferably 8 to 12 $\mu$m,
(ii) in a first loop reactor in the presence of an alkyl aluminium compound and a chain transfer agent

for obtaining a first intermediate material, the first intermediate material having a melt flow rate $MFR_{21}$ (190°C, 21.6 kg) of 0.01 to 1.5 g/10min, and
b) transferring the first intermediate material to a second loop reactor

(i) feeding ethylene to the second loop reactor
(ii) further polymerizing the first intermediate material

for obtaining a second intermediate material, the second intermediate material having a melt flow rate $MFR_2$ (190°C, 2.16 kg) of 15 to 50 g/10min; and
c) transferring the second intermediate material to a gas phase reactor

(i) feeding ethylene and comonomer to the gas phase reactor
(ii) further polymerizing the second intermediate material

for obtaining a base resin having a density of more than 946 kg/m$^3$ and equal to or less than 955 kg/m$^3$, determined according to ISO 1183-1:2004, and
d) extruding the base resin into a polyethylene composition having a melt flow rate $MFR_{21}$ (190°C, 21.6 kg) of 1.7 to 7.0 g/10 min, determined according to ISO 1133, a flow rate ratio $FRR_{21/5}$, being the ratio of $MFR_{21}$ (190°C, 21.6 kg) to $MFR_5$ (190°C, 5 kg), of more than 10 to equal to or less than 40, determined according to ISO 1133 in the presence of stabilizers and carbon black, and a viscosity at a constant stress of 747 Pa, $eta_{747Pa}$, of 4,500,000 Pa·s 10,000,000 Pa·s

9.  A process for producing the polyethylene composition according to any of the proceeding claims, wherein the base resin comprises at least three ethylene homo- or copolymer fractions (A), (B) and (C) being different in their weight average molecular weight $M_w$, with fraction (A) having the highest weight average molecular weight and fraction (B) having the lowest weight average molecular weight of fractions (A), (B) and (C), and fractions (A), (B) and (C) are polymerized in a multistage process in at least three sequential reactor stages in any order.

10. The process according to claim 9, wherein the multistage process comprises the following steps:

a) polymerizing ethylene in the presence of

(i) a silica supported Ziegler Natta catalyst having a molar composition of the catalyst including

|    |    |
|----|----|
| Al | 1.30 to 1.65 mol/kg silica, |
| Mg | 1.25 to 1.61 mol/kg silica, |
| Ti | 0.70 to 0.90 mol/kg silica |

and having a mean particle size (D50) of 7 to 15 $\mu$m, preferably 8 to 12 $\mu$m,
(ii) in a first loop reactor in the presence of an alkyl aluminium compound and a chain transfer agent

for obtaining a first intermediate material, the first intermediate material having a melt flow rate $MFR_{21}$ (190°C, 21.6 kg) of 0.01 to 1.5 g/10min, and
c) transferring the first intermediate material to a second loop reactor

(iii) feeding ethylene to the second loop reactor
(iv) further polymerizing the first intermediate material

for obtaining a second intermediate material, the second intermediate material having a melt flow rate $MFR_2$ (190°C, 2.16 kg) of 15 to 50 g/10min; and
c) transferring the second intermediate material to a gas phase reactor

(i) feeding ethylene and comonomer to the gas phase reactor
(ii) further polymerizing the second intermediate material

for obtaining a base resin having a density of more than 946 kg/m$^3$ and equal to or less than 955 kg/m$^3$, determined according to ISO 1183-1:2004, and
d) extruding the base resin into a polyethylene composition having a melt flow rate $MFR_{21}$ (190°C, 21.6 kg) of 1.7 to 7.0 g/10 min, determined according to ISO 1133, a flow rate ratio $FRR_{21/5}$, being the ratio of $MFR_{21}$ (190°C, 21.6 kg) to $MFR_5$ (190°C, 5 kg), of more than 10 to equal to or less than 40, determined according to ISO 1133 in the presence of stabilizers and carbon black, and a viscosity at a constant stress of 747 Pa, $eta_{747Pa}$, of 4,500,000 Pa·s to 10,000,000 Pa·s.

11. An article comprising the polyethylene composition according to any of claims 1 to 8.

12. The article according to claim 11 being a pipe or pipe fitting.

13. The pipe according to claims 11 or 12 having a S4 critical temperature of -21.0°C or lower.

14. Use of a polyethylene composition according to any of claims 1 to 10 for the production of an article.


**Patentansprüche**

1. Polyethylenzusammensetzung, umfassend:

ein Basisharz, das eine Dichte von mehr als 946,0 kg/m$^3$ und gleich zu oder weniger als 955,0 kg/m$^3$ aufweist, bestimmt gemäß ISO 1183-1:2004,
wobei die Zusammensetzung einen Schmelzflussindex $MFR_{21}$ (190 °C, 21,6 kg) von 1,7 bis 7,0 g/10 min, bestimmt gemäß ISO 1133, ein Flussindexverhältnis $FRR_{21/5}$, das das Verhältnis von dem $MFR_{21}$ (190 °C, 21,6 kg) zu dem $MFR_5$ (190 °C, 5 kg) ist, von mehr als 10 bis gleich zu oder weniger als 40, bestimmt gemäß ISO 1133, und eine Viskosität bei einer konstanten Belastung von 747 Pa, $eta_{747Pa}$, von 4.500.000 Pa·s bis 10.000.000 Pa·s aufweist.

2. Polyethylenzusammensetzung nach Anspruch 1, wobei die Zusammensetzung einen Strukturviskositätsindex $SHI_{2,7/210}$ von 10 bis 90 aufweist.

3. Polyethylenzusammensetzung nach einem der vorhergehenden Ansprüche, wobei die Zusammensetzung einem Polydispersitätsindex (PI) innerhalb des Bereichs von gleich zu oder höher als 1,0 Pa$^{-1}$ und weniger als 3,5 Pa$^{-1}$ aufweist.

4. Polyethylenzusammensetzung nach einem der vorhergehenden Ansprüche, wobei das Basisharz einen Gehalt an Einheiten, die sich von alpha-Olefinen mit 3 bis 12 Kohlenstoffatomen ableiten, von gleich zu oder mehr als 0,05 Mol-% bis gleich zu oder weniger als 1 Mol-% aufweist.

5. Polyethylenzusammensetzung nach einem der vorhergehenden Ansprüche, die einen Schmelzflussindex $MFR_5$ (190 °C, 5 kg) von 0,12 bis 0,21 g/10 min aufweist, gemessen gemäß ISO 1133.

6. Polyethylenzusammensetzung nach einem der vorhergehenden Ansprüche, wobei die Zusammensetzung eine Weißpunktebewertung von unter 6 aufweist, bestimmt gemäß ISO 18553/200-03-01.

7. Polyethylenzusammensetzung nach einem der vorhergehenden Ansprüche, wobei das Basisharz mindestens drei Ethylenhomo- oder -copolymerfraktionen (A), (B) und (C) aufweist, die sich in ihrem Gewichtsmittel des Molekulargewichts $M_W$ unterscheiden,

wobei die Fraktionen (A) und (B) beide ein Ethylenhomopolymer sind und die Fraktion (C) ein Copolymer aus Ethylen und mindestens einer alpha-Olefincomonomereinheit mit 3 bis 12 Kohlenstofatomen ist,

wobei die Fraktion (A) einen Schmelzflussindex $MFR_{21}$ (190 °C, 21,6 kg) von 0,01 bis 1,5 g/10 Minuten aufweist, die vereinten Fraktionen (A) und (B) einen Schmelzflussindex $MFR_2$ (190 °C, 2,16 kg) von 15 bis 50 g/10 min aufweisen, und

wobei die Fraktion (A) in einer Menge von 2,5 bis 15 Gew.-% in Bezug auf das Basisharz vorliegt,

und die vereinten Fraktionen (A) und (B) mit einer Menge von 50 bis 55 Gew.-% in Bezug auf das Basisharz vorliegen.

8. Polyethylenzusammensetzung, erhältlich durch ein mehrstufiges Verfahren, wobei das mehrstufige Verfahren das Folgende umfasst:

   a) Polymerisieren von Ethylen in Gegenwart von

      (i) einem silicageträgerten Ziegler-Natta-Katalysator, der eine mollare Zusammensetzung von dem Katalysator aufweist, umfassend

      | | |
      |---|---|
      | Al | 1,30 bis 1,65 mol/kg Silica, |
      | Mg | 1,25 bis 1,61 mol/kg Silica, |
      | Ti | 0,70 bis 0,90 mol/kg Silica, |

      und eine mittlere Partikelgröße (D50) von 7 bis 15 $\mu$m, vorzugsweise 8 bis 12 $\mu$m aufweist,
      (ii) in einem ersten Schlaufenreaktor in Gegenwart von einer Alkylaluminiumverbindung und einem Kettenübertragungsmittels,

   um ein erstes Zwischenmaterial zu erhalten, wobei das erste Zwischenmaterial einen Schmelzflussindex $MFR_{21}$ (190 °C, 21,6 kg) von 0,01 bis 1,5 g/10 min aufweist, und
   b) Überführen von dem ersten Zwischenmaterial zu einem zweiten Schlaufenreaktor

      (i) Zuführen von Ethylen zu dem zweiten Schlaufenreaktor
      (ii) ferner Polymerisieren von dem ersten Zwischenmaterial,

   um ein zweites Zwischenmaterial zu erhalten, wobei das zweite Zwischenmaterial einen Schmelzflussindex $MFR_2$ (190 °C, 2,16 kg) von 15 bis 50 g/10 min aufweist; und
   c) Überführen von dem zweiten Zwischenmaterial zu einem Gasphasenreaktor

      (i) Zuführen von Ethylen und Comonomer zu dem Gasphasenreaktor
      (ii) ferner Polymerisieren von dem zweiten Zwischenmaterial,

   um ein Basisharz zu erhalten, das eine Dichte von mehr als 946 kg/m$^3$ und gleich zu oder weniger als 955 kg/m$^3$ aufweist, bestimmt gemäß ISO 1183-1:2004, und
   d) Extrudieren von dem Basisharz zu einer Polyethylenzusammensetzung, die einen Schmelzflussindex $MFR_{21}$ (190 °C, 21,6 kg) von 1,7 bis 7,0 g/10 min, bestimmt gemäß ISO 1133, ein Flussindexverhältnis $FRR_{21/5}$, das das Verhältnis von dem $MFR_{21}$ (190 °C, 21,6 kg) zu dem $MFR_5$ (190 °C, 5 kg) ist, von mehr als 10 bis gleich zu oder weniger als 40, bestimmt gemäß ISO 1133, und zwar in Gegenwart von Stabilisatoren und Ruß, und eine Viskosität bei einer konstanten Belastung von 747 Pa, $eta_{747Pa}$, von 4.500.000 Pa·s bis 10.000.000 Pa·s aufweist.

9. Verfahren zum Herstellen von der Polyethylenzusammensetzung nach einem der vorhergehenden Ansprüche, wobei das Basisharz mindestens drei Ethylenhomo- oder -copolymerfraktionen (A), (B) und (C) aufweist, die sich in ihrem Gewichtsmittel des Molekulargewichts $M_W$ unterscheiden, wobei die Fraktion (A) das höchste Gewichtsmittel des Molekulargewichts und die Fraktion (B) das niedrigste Gewichtsmittel des Molekulargewichts der Fraktionen (A), (B) und (C) aufweist, und wobei die Fraktionen (A), (B) und (C) in einem mehrstufigen Verfahren in mindestens drei aufeinanderfolgenden Reaktorstufen in irgendeiner Reihenfolge polymerisiert werden.

10. Verfahren nach Anspruch 9, wobei das mehrstufige Verfahren die folgenden Schritte umfasst:

a) Polymerisieren von Ethylen in Gegenwart von

(i) einem silicageträgerten Ziegler-Natta-Katalysator, der eine mollare Zusammensetzung von dem Katalysator aufweist, umfassend

| | |
|---|---|
| Al | 1,30 bis 1,65 mol/kg Silica, |
| Mg | 1,25 bis 1,61 mol/kg Silica, |
| Ti | 0,70 bis 0,90 mol/kg Silica, |

und eine mittlere Partikelgröße (D50) von 7 bis 15 $\mu$m, vorzugsweise 8 bis 12 $\mu$m aufweist,
(ii) in einem ersten Schlaufenreaktor in Gegenwart von einer Alkylaluminiumverbindung und einem Kettenübertragungsmittels,

um ein erstes Zwischenmaterial zu erhalten, wobei das erste Zwischenmaterial einen Schmelzflussindex $MFR_{21}$ (190 °C, 21,6 kg) von 0,01 bis 1,5 g/10 min aufweist, und
c) Überführen von dem ersten Zwischenmaterial zu einem zweiten Schlaufenreaktor

(iii) Zuführen von Ethylen zu dem zweiten Schlaufenreaktor
(iv) ferner Polymerisieren von dem ersten Zwischenmaterial,

um ein zweites Zwischenmaterial zu erhalten, wobei das zweite Zwischenmaterial einen Schmelzflussindex $MFR_2$ (190 °C, 2,16 kg) von 15 bis 50 g/10 min aufweist; und
c) Überführen von dem zweiten Zwischenmaterial zu einem Gasphasenreaktor

(i) Zuführen von Ethylen und Comonomer zu dem Gasphasenreaktor
(ii) ferner Polymerisieren von dem zweiten Zwischenmaterial,

um ein Basisharz zu erhalten, das eine Dichte von mehr als 946 kg/m$^3$ und gleich zu oder weniger als 955 kg/m$^3$ aufweist, bestimmt gemäß ISO 1183-1:2004, und
d) Extrudieren von dem Basisharz zu einer Polyethylenzusammensetzung, die einen Schmelzflussindex $MFR_{21}$ (190 °C, 21,6 kg) von 1,7 bis 7,0 g/10 min, bestimmt gemäß ISO 1133, ein Flussindexverhältnis $FRR_{21/5}$, das das Verhältnis von dem $MFR_{21}$ (190 °C, 21,6 kg) zu dem $MFR_5$ (190 °C, 5 kg) ist, von mehr als 10 bis gleich zu oder weniger als 40, bestimmt gemäß ISO 1133, und zwar in Gegenwart von Stabilisatoren und Ruß, und eine Viskosität bei einer konstanten Belastung von 747 Pa, $eta_{747Pa}$, von 4.500.000 Pa·s bis 10.000.000 Pa·s aufweist.

11. Artikel, umfassend die Polyethylenzusammensetzung nach einem der Ansprüche 1 bis 8.

12. Artikel nach Anspruch 11, der ein Rohr oder ein Rohranschlussstück ist.

13. Rohr nach den Ansprüchen 11 oder 12, das eine kritische Temperatur S4 von -21,0 °C oder weniger aufweist.

14. Verwendung von einer Polyethylenzusammensetzung nach einem der Ansprüche 1 bis 10 für die Herstellung von einem Artikel.

## Revendications

1. Composition de polyéthylène comprenant
une résine de base ayant une masse volumique, déterminée conformément à la norme ISO 1183-1:2004, supérieure à 946,0 kg/m$^3$ et égale ou inférieure à 955,0 kg/m$^3$,
laquelle composition a un indice de fluage $MFR_{21}$ (190°C, 21,6 kg), déterminé conformément à la norme ISO 1133, de 1,7 à 7,0 g/10 min, un rapport d'indice de fluage $FRR_{21/5}$, qui est le rapport du $MFR_{21}$ (190°C, 21,6 kg) au $MFR_5$ (190°C, 5 kg), déterminés conformément à la norme ISO 1133, de plus de 10 à 40 ou moins, et une viscosité à une contrainte constante de 747 Pa, $eta_{747Pa}$, de 4 500 000 Pa.s à 10 000 000 Pa.s.

2. Composition de polyéthylène selon la revendication 1, laquelle composition a un indice de fluidification par cisaillement SHI$_{2,7/210}$ de 10 à 90.

3. Composition de polyéthylène selon l'une quelconque des revendications précédentes, laquelle composition a un indice de polydispersité PI situé dans la plage allant de 1,0 Pa$^{-1}$ ou plus à moins de 3,5 Pa$^{-1}$.

4. Composition de polyéthylène selon l'une quelconque des revendications précédentes, dans laquelle la résine de base a une teneur en motifs dérivés d'alpha-oléfines ayant 3 à 12 atomes de carbone de 0,05 % en moles ou plus à 1,0 % en moles ou moins.

5. Composition de polyéthylène selon l'une quelconque des revendications précédentes, ayant un indice de fluage MFR$_5$ (190°C, 5 kg), déterminé conformément à la norme ISO 1133, de 0,12 à 0,21 g/10 min.

6. Composition de polyéthylène selon l'une quelconque des revendications précédentes, laquelle composition a une note de points blancs, déterminée conformément à la norme ISO 18553/200-03-01, inférieure à 6.

7. Composition de polyéthylène selon l'une quelconque des revendications précédentes, dans laquelle la résine de base comprend au moins trois fractions d'homo- ou co-polymère d'éthylène (A), (B) et (C), qui diffèrent par leur masse moléculaire moyenne en masse M$_w$,
dans laquelle les fractions (A) et (B) sont toutes deux un homopolymère d'éthylène et la fraction (C) est un copolymère d'éthylène et d'au moins un motif comonomère d'alpha-oléfine ayant 3 à 12 atomes de carbone,
la fraction (A) a un indice de fluage MFR$_{21}$ (190°C, 21,6 kg) de 0,01 à 1,5 g/10 min,
les fractions (A) et (B) combinées ont un indice de fluage MFR$_2$ (190°C, 2,16 kg) de 15 à 50 g/10 min, et
la fraction (A) est présente en une quantité de 2,5 à 15 % en poids par rapport à la résine de base,
et les fractions (A) et (B) combinées sont présentes en une quantité de 50 à 55 % en poids par rapport à la résine de base.

8. Composition de polyéthylène pouvant être obtenue par un procédé à étapes multiples, le procédé à étapes multiples comprenant

    a) la polymérisation d'éthylène en présence de

        (i) un catalyseur de Ziegler-Natta supporté sur de la silice, ayant une composition molaire du catalyseur comprenant

| | |
|---|---|
| Al | 1,30 à 1,65 mol/kg de silice, |
| Mg | 1,25 à 1,61 mol/kg de silice, |
| Ti | 0,70 à 0,90 mol/kg de silice, |

        et ayant une granulométrie moyenne (D50) de 7 à 15 $\mu$m, de préférence de 8 à 12 $\mu$m,
        (ii) dans un premier réacteur à boucle en présence d'un composé alkyl-aluminium et d'un agent de transfert de chaîne,

    pour que soit obtenu un premier matériau intermédiaire, le premier matériau intermédiaire ayant un indice de fluage MFR$_{21}$ (190°C, 21,6 kg) de 0,01 à 1,5g/10 min, et
    b) le transfert du premier matériau intermédiaire dans un deuxième réacteur à boucle

        (i) l'introduction d'éthylène dans le deuxième réacteur à boucle,
        (ii) en outre la polymérisation du premier matériau intermédiaire,

    pour que soit obtenu un deuxième matériau intermédiaire, le deuxième matériau intermédiaire ayant un indice de fluage MFR$_2$ (190°C, 2,16 kg) de 15 à 50 g/10 min ; et
    c) le transfert du deuxième matériau intermédiaire dans un réacteur en phase gazeuse,

        (i) l'introduction d'éthylène et de comonomère dans le réacteur en phase gazeuse,
        (ii) en outre la polymérisation du deuxième matériau intermédiaire,

    pour que soit obtenue une résine de base ayant une masse volumique déterminée conformément à la norme ISO 1183-1:2004, supérieure à 946,0 kg/m$^3$ et égale ou inférieure à 955,0 kg/m$^3$, et

d) l'extrusion de la résine de base en une composition de polyéthylène ayant un indice de fluage MFR$_{21}$ (190°C, 21,6 kg), déterminé conformément à la norme ISO 1133, de 1,7 à 7,0 g/10 min, un rapport d'indice de fluage FRR$_{21/5}$, qui est le rapport du MFR$_{21}$ (190°C, 21,6 kg) au MFR$_5$ (190°C, 5 kg), déterminés conformément à la norme ISO 1133 en présence de stabilisants et de noir de carbone, de plus de 10 à 40 ou moins, et une viscosité à une contrainte constante de 747 Pa, eta$_{747Pa}$, de 4 500 000 Pa.s à 10 000 000 Pa.s.

9. Procédé pour produire une composition de polyéthylène selon l'une quelconque des revendications précédentes, dans lequel la résine de base comprend au moins trois fractions d'homo- ou de co-polymère d'éthylène (A), (B) et (C) qui diffèrent par leur masse moléculaire moyenne en masse M$_w$, la fraction (A) ayant la masse moléculaire moyenne en masse la plus élevée et la fraction (B) ayant la masse moléculaire moyenne en masse la plus faible parmi les fractions (A), (B) et (C), et les fractions (A), (B) et (C) sont polymérisées dans un procédé à étages multiples dans au moins trois étages de réacteur en série dans un ordre quelconque.

10. Procédé selon la revendication 9, dans lequel le procédé à étages multiples comprend les étapes suivantes :

a) polymérisation d'éthylène en présence de

(i) un catalyseur de Ziegler Natta supporté sur de la silice, ayant une composition molaire du catalyseur comprenant

| | |
|---|---|
| Al | 1,30 à 1,65 mol/kg de silice, |
| Mg | 1,25 à 1,61 mol/kg de silice, |
| Ti | 0,70 à 0,90 mol/kg de silice, |

et ayant une granulométrie moyenne (D50) de 7 à 15 $\mu$m, de préférence de 8 à 12 $\mu$m,

(ii) dans un premier réacteur à boucle en présence d'un composé alkyl-aluminium et d'un agent de transfert de chaîne,

pour que soit obtenu un premier matériau intermédiaire, le premier matériau intermédiaire ayant un indice de fluage MFR$_{21}$ (190°C, 21,6 kg) de 0,01 à 1,5 g/10 min, et

b) transfert du premier matériau intermédiaire dans un deuxième réacteur à boucle

(iii) introduction d'éthylène dans le deuxième réacteur à boucle,
(iv) en outre polymérisation du premier matériau intermédiaire,

pour que soit obtenu un deuxième matériau intermédiaire, le deuxième matériau intermédiaire ayant un indice de fluage MFR$_2$ (190°C, 2,16 kg) de 15 à 50 g/10 min ; et

c) transfert du deuxième matériau intermédiaire dans un réacteur en phase gazeuse,

(i) introduction d'éthylène et de comonomère dans le réacteur en phase gazeuse,
(ii) en outre polymérisation du deuxième matériau intermédiaire,

pour que soit obtenue une résine de base ayant une masse volumique déterminée conformément à la norme ISO 1183-1:2004, supérieure à 946,0 kg/m$^3$ et égale ou inférieure à 955,0 kg/m$^3$, et

d) extrusion de la résine de base en une composition de polyéthylène ayant un indice de fluage MFR$_{21}$ (190°C, 21,6 kg), déterminé conformément à la norme ISO 1133, de 1,7 à 7,0 g/10 min, un rapport d'indice de fluage FRR$_{21/5}$, qui est le rapport du MFR$_{21}$ (190°C, 21,6 kg) au MFR$_5$ (190°C, 5 kg), déterminés conformément à la norme ISO 1133 en présence de stabilisants et de noir de carbone, de plus de 10 à 40 ou moins, et une viscosité à une contrainte constante de 747 Pa, eta$_{747Pa}$, de 4 500 000 Pa.s à 10 000 000 Pa.s.

11. Article comprenant la composition de polyéthylène selon l'une quelconque des revendications 1 à 8.

12. Article selon la revendication 11, qui est un tuyau ou un raccord de tuyau.

13. Tuyau selon la revendication 11 ou 12, ayant une température critique S4 de -21,0°C ou moins.

**14.** Utilisation d'une composition de polyéthylène selon l'une quelconque des revendications 1 à 10 pour la production d'un article.

**Figure 1:**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1987097 A
- EP 1781712 A
- EP 1922342 A
- EP 1146079 A
- EP 688794 A
- WO 01155230 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A

- EP 600414 A
- EP 721798 A
- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 2006063771 A
- EP 428054 A
- WO 9619503 A
- WO 9632420 A

**Non-patent literature cited in the description**

- **HUNG ; BROWN.** *Polymer,* 1992, vol. 33, 2989-2997
- **GELDART ; BAYENS.** The Design of Distributors for Gas-fluidized Beds. *Powder Technology,* 1985, vol. 42
- **GELDART.** Gas Fluidisation Technology. J. Wiley & Sons, 1996
- **SCHEIRS ; BÖHM ; BOOT ; LEEVERS.** PE100 Resins for Pipe Applications. *TRIP,* 1996, vol. 4 (12), 408-415
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Reson.,* 2005, vol. 176, 239

- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **ZHOU, Z. ; MUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **J. RANDALL.** *Macromol. Sci., Rev. Macromol. Chem. Phys.,* 1989, vol. C29, 201
- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol,* 1992, vol. 1, 360-362
- **HEINO, E.L.** The influence of molecular structure on some rheological properties of polyethylene. *Annual Transactions of the Nordic Rheology Society,* 1995

• Definition of terms relating to the non-ultimate mechanical properties of polymers. *Pure & Appl. Chem.,* 1998, vol. 70 (3), 701-754